# EUROPEAN PATENT APPLICATION

(11) **EP 2 264 710 A2**
(43) Date of publication of application: **22.12.2010**
(21) Application number: 10164709.7
(22) Date of filing: 02.06.2010
(51) Int. Cl.: G11B 27/00

(54) **Information reproducing apparatus, information reproducing method, and program**

(30) Priority: 19.06.2009 JP 2009145986
(71) Applicant: Sony Corporation, Tokyo 108-0075 (JP)
(72) Inventor: Fujiwara, Naoki, Tokyo (JP)
(74) Representative: Robinson, Nigel Alexander Julian

(57) **Abstract**

An information reproducing apparatus includes: a reproduction controller which generates a stop period discerning signal for discerning a stop period in which output of an image signal to a display section is stopped and outputs the generated stop period discerning signal with the image signal; and a display controller which controls the output of the image signal to the display section, the display controller discerning the stop period on the basis of the stop period discerning signal, stopping the output of the image signal to the display section in the stop period, and enabling the output of the image signal in an effective period other than the stop period.

## Description

The present invention relates to an information reproducing apparatus, an information reproducing method and program, and more specifically, to an information reproducing apparatus, an information reproducing method and a program which perform contents reproduction at a variety of reproduction speeds such as a high reproduction speed or a low reproduction speed.

An information reproducing apparatus which reproduces contents recorded in a medium (information recording medium) such as a hard disc, DVD or BD may have the function of changing a reproduction speed for reproduction. Such an apparatus can perform, for example, a high speed reproduction and a low speed reproduction by a user's designation.

For example, in a reproduction speed changing process in the related art, the following process is performed. In a high speed reproduction process, a decimation is set between frames forming moving image contents at a predetermined interval, and the frames after decimation are displayed in a display section. Further, in a low speed reproduction process, the same frame is overlapped and displayed to be repeated in a plurality of times.

However, if the frame decimation process or the frame overlapping display process is performed, jerkiness is generated. For example, if a moving object which moves at a specific speed is displayed, the movement becomes unnatural. The jerkiness which is a so-called movement shake is generated.

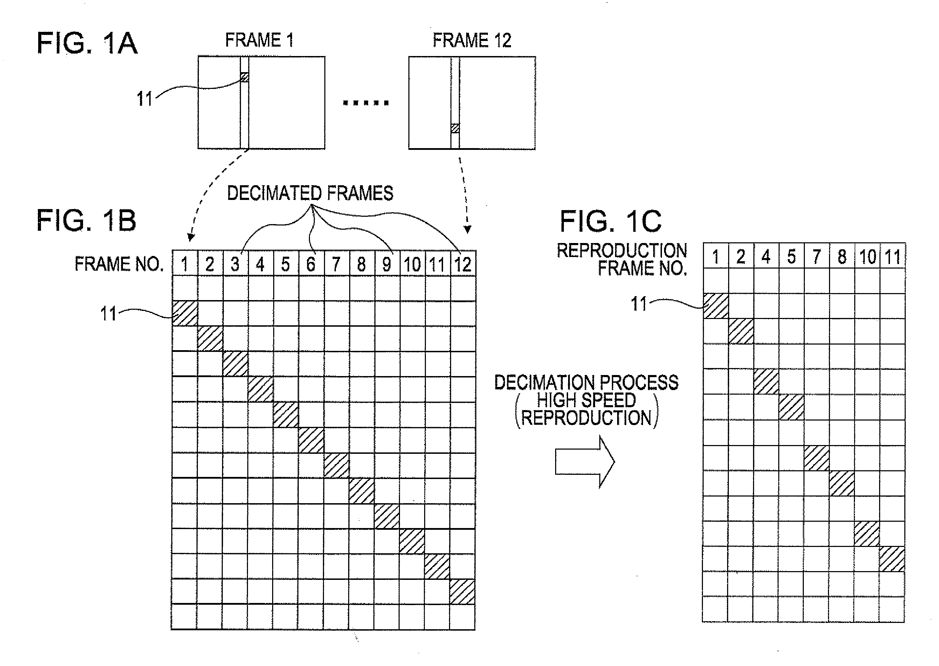

Referring to Figs. 1A to 1C, a generation mechanism of the jerkiness will be described. A case is assumed in which a high speed reproduction is performed with respect to frames 1 to 12 which are temporally continued as shown in Fig. 1A. The respective frames 1 to 12 include a moving object 11. The object 11 moves downward according to the progression of the frame. Fig. 1B is a diagram illustrating an example in which the frames 1 to 12 are arranged by extracting only a longitudinal line of an image region including the object 11. A measure in the longitudinal direction is 1 pixel. The moving object 11 moves downward by one pixel with respect to each frame.

In the case where the image data is reproduced at a high speed, the frame decimation is performed. In this respect, a process of setting the frames 3, 6, 9 and 12 as decimation is performed for reproduction. The reproduction speed becomes 1.5 times (3/2 times). The frame decimation result is shown in Fig. 1C. The reproduction image is reproduced in the order of the frames 1, 2, 4, 5, 7, 8, 10 and 11 with the frames 3, 6, 9 and 12 being decimated.

As shown in Fig. 1C, the moving object 11 moves by one pixel between the reproduction frames 1 and 2, and moves by two pixels between the reproduction frames 2 and 4. In the high speed reproduction, the reproduction is performed with temporally equally-spaced intervals in the frame order of the frames 1, 2, 4, 5, 7, 8, 10 and 11. As a result, a user comes to view an unnatural movement that the movement of the object 11 is repeatedly fast or slow. This is a so-called jerkiness phenomenon in which the movement of the display object is stuttered. The cause of the jerkiness is the decimation process of the reproduction frame.

This applicant has proposed a configuration that a frequency which is a clock speed of a system clock is changed so that the clock frequency is set to a high speed reproduction and the clock frequency is decreased in a low speed reproduction, in order to solve the jerkiness generated according to such a change in the reproduction speed. The configuration is disclosed in Japanese Unexamined Patent Application Publication No. 2007-74037 and Japanese Unexamined Patent Application Publication No. 2007-74038.

A process disclosed in these patent documents realizes the high speed reproduction or low speed reproduction by changing output frame rates, and performs a process similar to a multi-scan monitor which is used for a display apparatus or the like of computer devices in which its frame rate is changeable.

The multi-scan monitor which is used for the display apparatus of a personal computer (PC) or the like can receive moving images of a frame frequency of 70Hz or 80Hz in addition to, for example, 59.94Hz which is a reference frame rate of the NTSC service, and also can perform display at the frame rate. If the display is performed at the frame rate according to the speed even though the reproduction speed is changed, the jerkiness is not generated. Accordingly, if the multi-scan monitor is used, the display can be performed without generating movement deterioration even though the reproduction speed is changed.

However, if the reproduction speed is dynamically to be changed, a problem occurs in the multi-scan monitor. Specifically, when changing the frame rate, a period in which a screen display is not performed, a so-called "time lag" is generated. That is, in the case where the viewing speed is dynamically to be changed while reproducing contents, a period in which the display stops is generated, and thus, it is difficult to continue to view well.

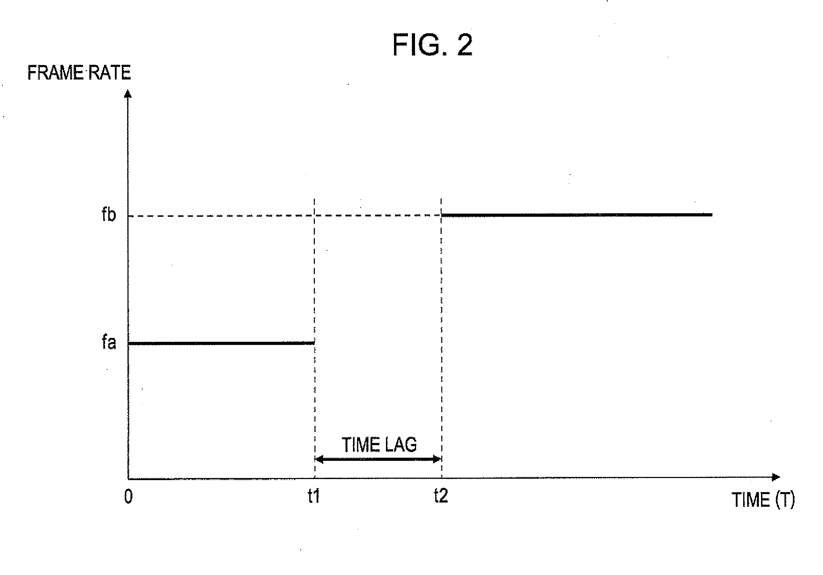

For example, as shown in Fig. 2, even though a user wants to change the contents which are being reproduced at a frame rate fa into a frame rate [Fb] by inputting a reproduction speed changing instruction at a point of time (t1), images from a point of time (t1) to a point of time (t2) after a predetermined time are in a stopped state. Thereafter, the reproduction can be performed at the frame rate [Fb] from the point of time (t2). A period of time t1 to t2 is generated as the lag (time lag).

The time lag is represented as a period in which a lock is deviated. The multi-scan monitor reads input image data on the basis of a timing reference signal which is called a sync which is a synchronization signal. Thus, it is necessary to perform a new synchronization adjustment when changing the reproduction speed, and in this period, the time lag is generated in which the reproduction is stopped. That is, it is necessary to change a timing of the sync signal in changing the frame rate, and thus, the data is not temporarily read. For example, in the case of an apparatus where a phase locked loop (PLL) clock signal is generated from the sync signal to perform an internal operation, since the lock of PLL is deviated, a period in which the data reading is not performed is generated.

Changing the output frame rate is effective as a method of changing the reproduction speed without generating jerkiness, but, as described above, there is the problem that the time lag that the output image is stopped is generated when the output frame rate is changed.

An advantage of some embodiments of the invention is to provide an information reproducing apparatus, an information reproducing method and a program which can prevent generation of jerkiness and smoothly change a reproduction speed in a contents reproduction process in which the reproduction speed such as a high speed reproduction or a low speed reproduction is changed.

According to at least an example embodiment of the invention, there is provided an information reproducing apparatus including: a reproduction controller which generates a stop period discerning signal for discerning a stop period in which output of an image signal to a display section is stopped and outputs the stop period discerning signal with the image signal; and a display controller which controls the output of the image signal to the display section, the display controller discerning the stop period on the basis of the stop period discerning signal, stopping the output of the image signal to the display section in the stop period, and performing the output of the image signal in an effective period other than the stop period.

Further, according to the at least example embodiment, the reproduction controller may set the stop period with respect to an original image which is a maximum speed reproduction image of an n×speed image, and may generate the stop period discerning signal for enabling reproduction at a specific speed in a range of 0 to n×speed; and the display controller may display as the n×speed image an image in which the stop period is not set by continuously outputting the image to the display section, and may display as a 0 to n×speed image an image in which the stop period is set by stopping outputting the image to the display section corresponding to the length of the stop period on the basis of the stop period discerning signal.

Further, according to the at least example embodiment, the reproduction controller may set the stop period according to any one or any combination of (a) a Y directional intensive stop period setting type in which the stop period is set between image frames, (b) a Y directional dispersed stop period setting type in which the stop period is dispersedly set in each image frame, (c) an X directional intensive stop period setting type in which the stop period is set between lines forming the image frame, and (d) an X direction dispersed stop period setting type in which the stop period is dispersedly set inside the lines forming the image frame, and may generate the stop period discerning signal for discerning the set stop period.

Further, according to the at least example embodiment, the reproduction controller may determine the stop period for achieving a designated reproduction speed on the basis of reproduction speed designation information which is input through a user interface, and may generate the stop period discerning signal for discerning the determined stop period.

Further, according to the embodiment, the reproduction controller may generate, as the stop period discerning signal, an enable signal in which a valid period and an invalid period of a clock signal for controlling a process timing of the display controller are set so that the stop period is set as the invalid period; and the display controller may discern the valid period and the invalid period of the input clock signal on the basis of the enable signal, and may output the image signal to the display section in the valid period and stops outputting the image signal to the display section in the invalid period.

Further, according to the at least example embodiment, the reproduction controller may generate, as the stop period discerning signal, an adjusted signal of a synchronization signal in which at least one of a vertical synchronization signal and a horizontal synchronization signal of the image signal; and the display controller may compare a count value of a clock number in a synchronization signal period of the adjusted signal of the synchronization signal with a reference count value which is previously stored in a memory, may determine the synchronization signal period exceeding the reference count value as the stop period, and may stop outputting the image signal to the display section.

Further, according to another at least example embodiment of the invention, there is provided an information reproducing apparatus including: a reproduction controller which generates a stop period discerning signal for discerning a stop period in which output of an image signal to a display section is stopped and outputs the stop period discerning signal with the image signal; and a display controller which controls the output of the image signal to the display section, the display controller generating an adjustment clock signal in which the frequency of a system clock is adjusted according to a reproduction speed discerned by the stop period discerning signal and driving a display device driving section according to the adjustment clock signal to perform change of the reproduction speed.

According to still another at least example embodiment of the invention, there is provided an information reproducing method which is performed in an information reproducing apparatus, including: generating a stop period discerning signal for discerning a stop period in which output of an image signal to a display section is stopped and outputting the stop period discerning signal with the image signal, by a reproduction controller; and discerning the stop period on the basis of the stop period discerning signal, stopping the output of the image signal to the display section in the stop period, and enabling the output of the image signal in an effective period other than the stop period, by a display controller which controls the output of the image signal to the display section.

According to yet still another at least example embodiment of the invention, there is provided a program for executing an information reproducing process in an information reproducing apparatus, including: generating a stop period discerning signal for discerning a stop period in which output of an image signal to a display section is stopped and outputting the stop period discerning signal with the image signal, in a reproduction controller; and discerning the stop period on the basis of the stop period discerning signal, stopping the output of the image signal to the display section in the stop period, and enabling the output of the image signal in an effective period other than the stop period, in a display controller which controls the output of the image signal to the display section.

The program according to an at least example embodiment of the invention may be provided, for example, as a storage medium or a communication medium which is provided in a computer-readable manner with respect to an image processing apparatus or a computer system which is capable of performing a variety of program codes. By providing such a program in a computer-readable manner, a process corresponding to the program is performed in the image processing apparatus or the computer system.

Other features and advantages of the invention will be apparent by detailed description based on embodiments of the invention and accompanying drawings. In the description, a system has a configuration that a plurality of apparatuses is logically combined, and is not limited to a configuration that respective apparatuses are installed inside of the same casing.

According to the at least example embodiments of the invention, the maximum speed reproduction image of the n×speed image is set as the original image, and the stop period discerning signal for discerning the stop period of the image signal output to the display section is set with respect to the original image. The display controller discerns the stop period on the basis of the stop period discerning signal and stops the image signal output to the display section in the stop period, and outputs the image signal in the valid period other than the stop period. Through the image signal output stop process according to the length of the stop period, the image display of 0 to n×speed can be realized without jerkiness.

Further particular and preferred aspects of the present invention are set out in the accompanying independent and dependent claims. Features of the dependent claims may be combined with features of the independent claims as appropriate, and in combinations other than those explicitly set out in the claims.

The present invention will be described further, by way of example only, with reference to preferred embodiments thereof as illustrated in the accompanying drawings, in which:
Figs. 1A to 1C are diagrams illustrating a jerkiness generation mechanism.
Fig. 2 is a diagram illustrating an example of a reproduction speed change in a reproducing apparatus in the related art.
Fig. 3 is a diagram illustrating a configuration of an information reproducing apparatus according to an example embodiment of the invention.
Fig. 4 is a diagram illustrating an example of a reproduction speed change in an information apparatus according to an example embodiment of the invention.
Fig. 5 is a diagram illustrating a configuration of an information reproducing apparatus according to an example embodiment of the invention.
Fig. 6 is a diagram illustrating examples of a setting process of a stop period and a reproduction process using the stop period which is performed in an information reproducing apparatus according to an example embodiment of the invention;
Fig. 7 is a diagram illustrating examples of a setting process of a stop period and a reproduction process using the stop period which is performed in an information reproducing apparatus according to an example embodiment of the invention;
Fig. 8 is a diagram illustrating examples of a setting process of a stop period and a reproduction process using the stop period which is performed in an information reproducing apparatus according to an example embodiment of the invention;
Fig. 9 is a diagram illustrating a data output sequence which is performed in a reproducing apparatus;
Fig. 10 is a diagram illustrating a data output sequence to which a stop period which is performed in an information reproducing apparatus according to an example embodiment of the invention is applied;
Fig. 11 is a diagram illustrating a data output sequence to which a stop period which is performed in an information reproducing apparatus according to an example embodiment of the invention is applied;
Fig. 12 is a diagram illustrating a data output sequence to which a stop period which is performed in an information reproducing apparatus according to an example embodiment of the invention is applied;
Fig. 13 is a diagram illustrating a data output sequence to which a stop period which is performed in an information reproducing apparatus according to an example embodiment of the invention is applied;
Fig. 14 is a diagram illustrating a data output sequence to which a stop period which is performed in an information reproducing apparatus according to an example embodiment of the invention is applied;
Fig. 15 is a diagram illustrating a setting example of a stop period discerning signal which is performed in an information reproducing apparatus according to an example embodiment of the invention;
Fig. 16 is a diagram illustrating a setting example of a stop period discerning signal which is performed by an information reproducing apparatus according to an example embodiment of the invention;
Fig. 17 is a diagram illustrating process examples of setting of a stop period using a synchronization signal and reproduction according to the stop period discernment which is performed in an information reproducing apparatus according to an example embodiment of the invention;
Fig. 18 is a diagram illustrating process examples of setting of a stop period using a synchronization signal and reproduction according to the stop period discernment which is performed in an information reproducing apparatus according to an example embodiment of the invention;
Fig. 19 is a diagram illustrating process examples of setting of a stop period using a synchronization signal and reproduction according to the stop period discernment which is performed in an information reproducing apparatus according to an example embodiment of the invention;
Fig. 20 is a diagram illustrating process examples of setting of a stop period using a synchronization signal and reproduction according to the stop period discernment which is performed in an information reproducing apparatus according to an example embodiment of the invention;
Fig. 21 is a diagram illustrating a data output sequence according to stop period setting discernment using a synchronization signal which is performed in information reproducing apparatus according to an example embodiment of the invention;
Fig. 22 is a diagram illustrating a data output sequence according to stop period setting discernment using a synchronization signal which is performed in information reproducing apparatus according to an example embodiment of the invention;
Fig. 23 is a diagram illustrating a configuration of a display controller of an information reproducing apparatus according to an example embodiment of the invention;
Fig. 24 is a diagram illustrating a configuration of a display controller of an information reproducing apparatus according to an example embodiment of the invention;
Fig. 25 is a diagram illustrating an example of an adjustment clock signal which is generated in a display controller of an information reproducing apparatus according to an example embodiment of the invention; and
Fig. 26 is a diagram illustrating an example of an adjustment clock signal which is generated in a display controller of an information reproducing apparatus according to an example embodiment of the invention.

Hereinafter, an information reproducing apparatus, an information reproducing method and a program of the invention will be described with reference to the accompanying drawings. The embodiments of the invention will be described in the following order.
1. Example of a configuration and a process of an information reproducing apparatus of the invention (first embodiment)
2. Example of a process in which a stop period discerning signal is omitted and the stop period discerning is performed according to a setting change of a synchronization signal (Sync) (second embodiment)
3. Example of a process in which a supply clock with respect to a display device is changed according to a stop period discerning signal (third embodiment)

### 1. Example of a configuration and a process of an information reproducing apparatus of the invention (first embodiment)

Hereinafter, an information reproducing apparatus, an information reproducing method, and a computer program of the invention will be described in detail with reference to the accompanying drawings.

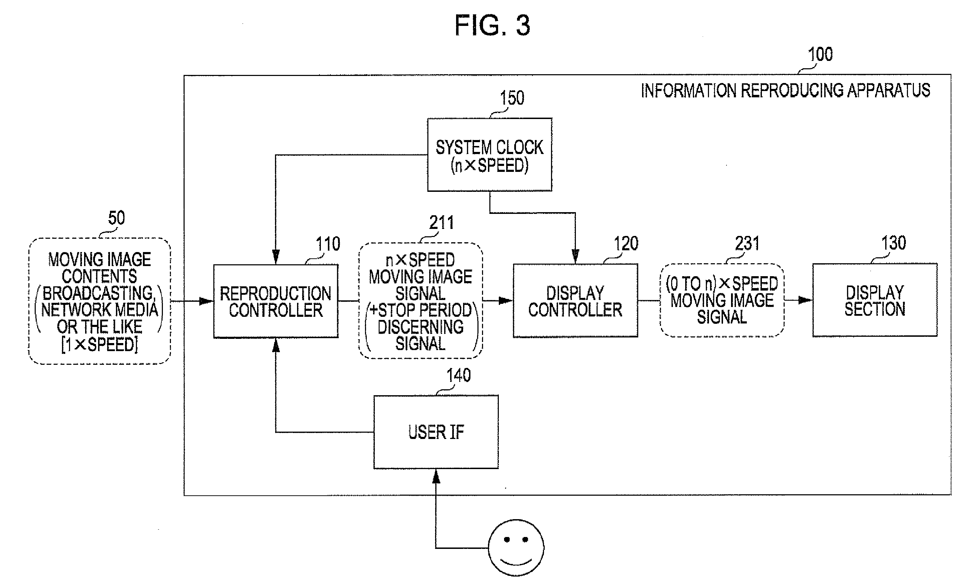

Firstly, a configuration of an information reproducing apparatus according to an embodiment of the invention will be described with reference to Fig. 3 and below. An information reproducing apparatus 100 shown in Fig. 3 is an information reproducing apparatus which performs a reproduction process, of contents which are stored in an information recording medium such as a DVD, hard disc or the like, or contents input through broadcasting or networks. The information reproducing apparatus 100 has the same configuration as, for example, a recording reproducing apparatus in the related art, for example, a recording reproducing apparatus such as a VTR or HDD recorder, and may be provided as an apparatus which has a configuration for performing a process according to the embodiment shown in Fig. 3. Fig. 3 is a diagram illustrating extracted sections according to the embodiment which is different from the apparatus in the related art.

The information reproducing apparatus 100 according to the embodiment displays moving image contents through a display section 130, and has features of reproducing input contents and changing a reproduction speed. Further, jerkiness which is movement deterioration is not generated even though the reproduction speed is changed, and an image stop period is not greatly generated when the reproduction speed is changed.

As shown in Fig. 3, the information reproducing apparatus 100 includes a reproduction controller 110, a display controller 120, a display section 130, a user interface (IF) 140 and a system clock 150.

The reproduction controller 110 decodes images, voice and additional data (subtitles or the like) included in input contents. The display controller 120 performs a process in which the decoded data is input from the reproduction controller 110 to display in the display section 130. In Fig. 3, the reproduction controller 110 and the display controller 120 are provided in the integrated apparatus, but the respective components may be provided as separate apparatuses and connected with each other, for example, through a cable or a network.

A user views images displayed in the display section 130. It is preferable that the display section 130 is provided as, for example, a hold type display device such as a liquid crystal display device.

The user may randomly designate a reproduction speed through the user IF 140. The reproduction speed may be manually designated by a user, may be preset inside a system as an initial reproduction speed, or may be set using a reproduction speed of a generated default.

The system clock 150 supplies a clock having a clock period of n×speed or more to the reproduction controller 110 and the display controller 120 so that a content reproduction process of the n×speed can be performed with respect to the reproduction controller 110 and the display controller 120. Here, n may be set to 2, 4 or the like. The system clock 150 supplies the clock of the n×speed period which is faster than a supplied clock in a general reproducing apparatus.

The reproduction controller 110 and the display controller 120 perform a process according to the n×speed clock. For example, in a case where n=2, reproducing data of a 2×speed reproduction speed is generated. In a case where n=4, reproducing data of a 4×speed reproduction speed is generated. The reproduction process using such a high speed clock is disclosed in Japanese Unexamined Patent Application Publication No. 2007-74037 and Japanese Unexamined Patent Application Publication No. 2007-74038, which has been filed by the present applicant.

In the configuration disclosed in Japanese Unexamined Patent Application Publication No. 2007-74037 and Japanese Unexamined Patent Application Publication No. 2007-74038, a variety of clock periods may be set. That is, in a case where high speed reproduction is performed, a high speed clock period is set; and in a case where low speed reproduction is performed, a low speed clock period is set.

In this embodiment, the system clock 150 shown in Fig. 3 supplies the n×speed clock for generating high speed reproduction contents of the n×speed to the reproduction controller 110 and the display controller 120. As described above, n may be a fixed value of 2 or the like. The reproduction controller 110 generates contents capable of the n×speed reproduction according to the n×speed clock. The process up to here is the same process as in Japanese Unexamined Patent Application Publication No. 2007-74037 and Japanese Unexamined Patent Application Publication No. 2007-74038.

The information reproducing apparatus 100 according to the embodiment generates reproduction contents of a specific speed of 0 to n×speed, on the basis of contents capable of reproducing at the n×speed.

As shown in Fig. 3, the reproduction controller 110 generates an n×speed moving image signal 211 and outputs the generated signal to the display controller 120. As shown in Fig. 3, the n×speed moving image signal 211 which is output to the display controller 120 by the reproduction controller 110 includes a stop period discerning signal.

The display controller 120 generates a 0 to n×speed moving image signal 231 and then displays the generated signal through the display section 130, using the n×speed moving image signal 211 and the stop period discerning signal which are input from the reproduction controller 110. A user may designate reproduction speed in a range of 0 to nxtimes through the user IF 140 at a specific timing. The reproduction controller 110 performs a process in which the stop period discerning signal is generated or changed according to a reproduction speed designation signal which is input through the user IF 140. Due to this process, the reproduction speed of the moving image contents which are displayed through the display section 130 is immediately changed to a range of 0 to n×speed.

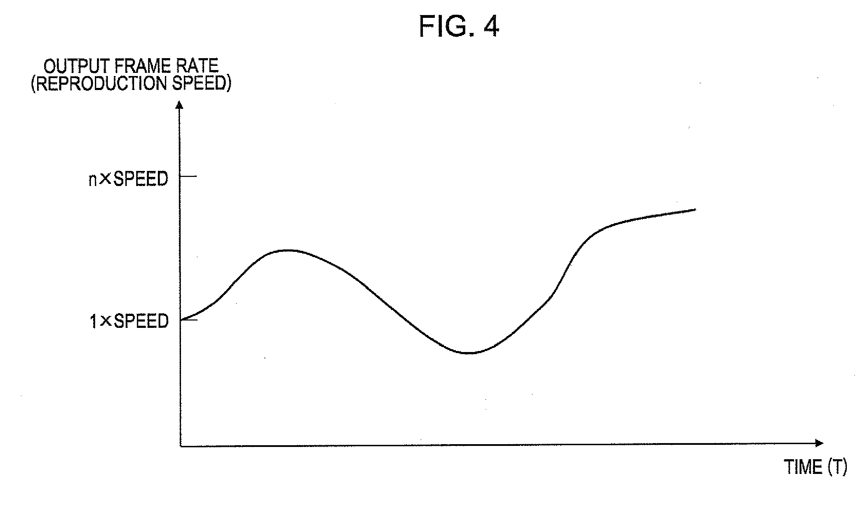

The information reproducing apparatus 100 according to the embodiment may perform the changing process of the reproduction speed, for example, with an image as shown in Fig. 4. In Fig. 4, the longitudinal axis indicates a reproduction speed (output frame rate), and the transverse axis indicates time. A user may perform reproduction speed changing designation in the range of 0 to n×speed at a specific timing through the user IF 140. The reproduction controller 110 and the display controller 120 performs a process according to the user designation and changes the reproduction speed of contents which are displayed through the display section 130 into a user designated speed.

More specifically, the reproduction speed of the contents is changed as the stop period is changed. The detailed description with respect to the process will be described later. In the apparatus in the related art, it is necessary to perform resetting of a so-called sync (synchronization signal) when the reproduction speed is changed, and an output image is stopped during the processing period, but in this embodiment, since it is not necessary to perform the resetting of such a sync (synchronization signal), and the reproduction speed is changed according to the setting and change processes of the stop period, a smooth reproduction speed changing process is realized without an image stop as shown in Fig. 4.

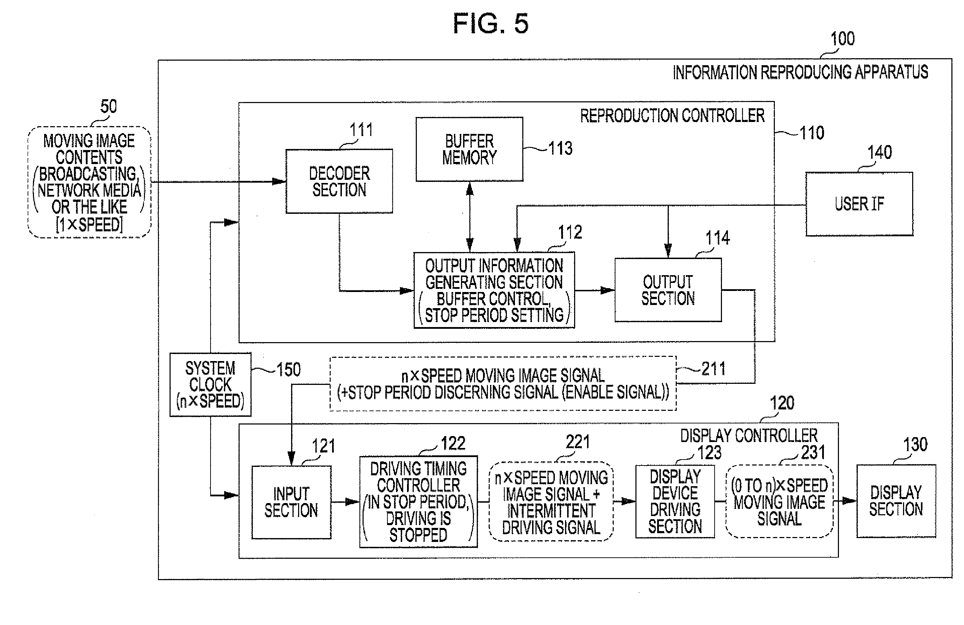

Fig. 5 is a diagram illustrating a detailed configuration example of the reproduction controller 110 and the display controller 120 in the information reproducing apparatus 100 according to the present embodiment.

The reproduction controller 110 includes a decoder section 111, an output information generating section 112, a buffer memory 113, and an output section 114.

The display controller 120 includes an input section 121, a driving timing controller 122, and a display device driving section 123.

The decoder section 111 inside the reproduction controller 110 performs a decoding process of input contents, for example, an MPEG decoding process or the like, and supplies the decoded result to the output information generating section 112. The output information generating section 112 temporarily stores the decoded result which is input from the decoder section 111 to the buffer memory 113. The output information generating section 112 sets the stop period according to the content reproduction speed which is designated through the user IF 140 and generates stop period discerning signal information (enable signal) according to the set stop period.

The output information generating section 112 outputs contents including an image signal and a voice signal which are stored in the buffer memory 113 and the stop period discerning signal (enable signal), to the display section 120 through the output section 114. The reproduction controller 110 receives the n×speed clock from the system clock for operation, and the contents which are supplied to the display controller 120 from the reproduction controller 110 are contents in which the n×speed reproduction is performed if reproduction is performed as such. The contents include the moving image signal and the voice signal, but in the case of reproduction in synchronization with the reproduction speed of the image signal or high speed reproduction, a process of cutting the voice signal may be performed. Hereinafter, the process of the moving image signal will be described.

As shown in Fig. 5, the n×speed moving image signal 211 is transmitted to the display controller 120 from the reproduction controller 110. The n×speed moving image signal 211 includes the stop period discerning signal (enable signal).

The input section 121 in the display controller 120 receives the signal transmitted from the reproduction controller 110 and supplies the received signal to the driving timing controller 122. The driving timing controller 122 drives the display device driving section 123 to display the n×speed image through the display section 130. In the process, the driving timing controller 122 performs a process of stopping display of the n×speed image signal during the stop period which is indicated by the stop period discerning signal (enable signal).

That is, the driving timing controller 122 stops driving of the display device driving section 123 during a period which is the stop period set by the stop period discerning signal (enable signal), and performs the driving of the display device driving section 123 during only a period (valid period) other than the stop period set by the stop period discerning signal (enable signal) to display the n×speed moving image signal.

As shown in Fig. 5, the driving timing controller 122 drives the display device driving section 123 by the n×speed moving image signal + an intermittent driving signal 221. Through this process, a (0 to n)×speed moving image signal 231 is displayed through the display section 130.

In the case where the stop period is not set by the stop period discerning signal (enable signal), the moving image which is displayed in the display section 130 becomes n×speed. On the other hand, in the case where the stop period is set by the stop period discerning signal (enable signal), according to the length of the set stop period, the reproduction speed of the reproduction contents is set in the range of (0 to n)×speed.

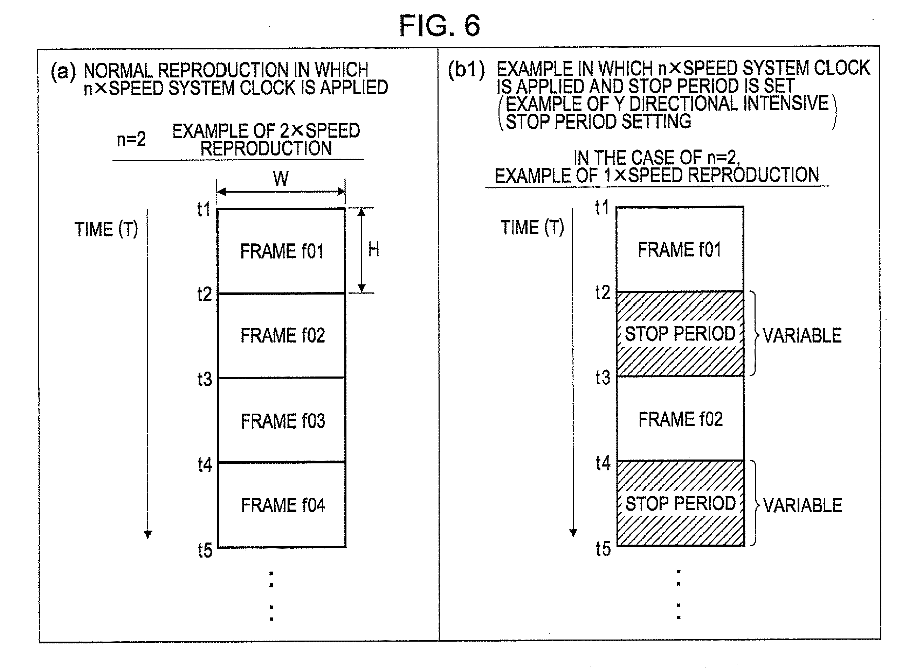

An example of a relationship of setting of the stop period and the reproduction speed will be described with reference to Fig. 6 and below. In Fig. 6, Fig. 6(a) illustrates a normal reproduction in which an n×speed system clock is applied; and Fig. 6(b1) illustrates an example in which the n×speed system clock is applied and a stop period (a Y directional intensive stop period setting example) is set.

Hereinafter, a case in which n=2 and a 2×speed system clock is used will be described. In this respect, in a case where reproduction is performed without setting the stop period, the 2×speed reproduction is performed.

Fig. 6(a) illustrates an example of a reproduction process in which the stop period is not set in the case where n=2, each of frames f01 to f04, and so on is reproduced at 2×speed. Each frame has the size of W×H. The frame f01 is displayed in a period of time t1 to t2; the frame f02 is displayed in a period of time t2 to t3; the frame f03 is displayed in a period of time t3 to t4; and the frame f04 is displayed in a period of time t4 to t5.

On the other hand, Fig. 6(b1) illustrates an example in which the stop period is set. The stop period setting example shown in Fig. 6(b1) illustrates an example in which the same period as one frame display period in the 2×speed reproduction is set as the stop period. In this case, the 1×speed reproduction is realized.

The stop period is set after displaying each frame. In the example in Fig. 6(b1), the frame f01 is displayed in the period of time t1 to t2, and then, the frame f01 is continuously displayed in the stop period t2 to t3.

In the stop period t2 to t3, the driving timing controller 122 of the display controller 120 shown in Fig. 4 stops output of a display signal of the frame f02 with respect to the display device driving section 123. The display section 130 shown in Figs. 3 and 5 is the hold type display section such as a liquid crystal display apparatus, and continuously displays the previous display signal until the next display signal is input. Accordingly, the frame f01 is continuously displayed in the stop period t2 to t3 shown in Fig. 6(b1). That is, the frame f01 is displayed in the display section 130 in the period of time t1 to t3.

The period of time t3 to t4 after the stop period t2 to t3 is a valid period when the stop period terminates, and in this valid period, the display signal of the frame f02 is output to the display device driving section 123. Accordingly, the frame f02 is displayed during the period of time t3 to t4. Then, the frame f02 is continuously displayed in the stop period t4 to t5.

Due to the setting of the stop period as shown in Fig. 6(b1), the n×speed contents can be reproduced with the reproduction speed being reduced into n/2×speed. In the examples of Fig. 6, n=2 and the 2×speed contents can be reproduced as the 1×speed contents.

In the example shown in Fig. 6(b1), the stop period is set as the same period as the 1 frame display period, but the length of the stop period may be set to a specific value as shown in "variable" in Fig. 6(b1). If the stop period is set to be long, the reproduction speed may be decreased, and if the stop period is set to be short, the reproduction speed may be increased. That is, due to a variety of stop period settings with respect to the input n×speed contents, the contents can be reproduced at a specific reproduction speed of 0 to n×speed.

The reproduced frame in the case where the 0 to n×speed reproduction is performed is all frames included in original contents which are capable of n×speed reproduction, and a deleted frame does not exist. Accordingly, a high quality moving image can be reproduced without jerkiness.

In the examples shown in Fig. 6, after the reproducing period of one frame in the normal reproduction of the n×speed, the stop period is intensively set before the next frame reproduction is started, but the setting of the stop period is not limited thereto. The stop periods may be set to be dispersed inside the reproduction output period of one frame.

Assuming that a frame direction (H direction) is the Y direction and a scanning direction of the frame (W direction) is an X direction, according to the direction in which the stop period is set, and according to whether the stop period is intensively set (intensive type) or is dispersedly set (dispersed type), there are four stop period setting types: an X directional intensive stop period setting type; an X directional dispersed stop period setting type; a Y directional intensive stop period setting type; and a Y directional dispersed stop period setting type.

As described above, there are four stop period setting types. The example in Fig. 6(b1) illustrates the Y directional intensive stop period setting type.

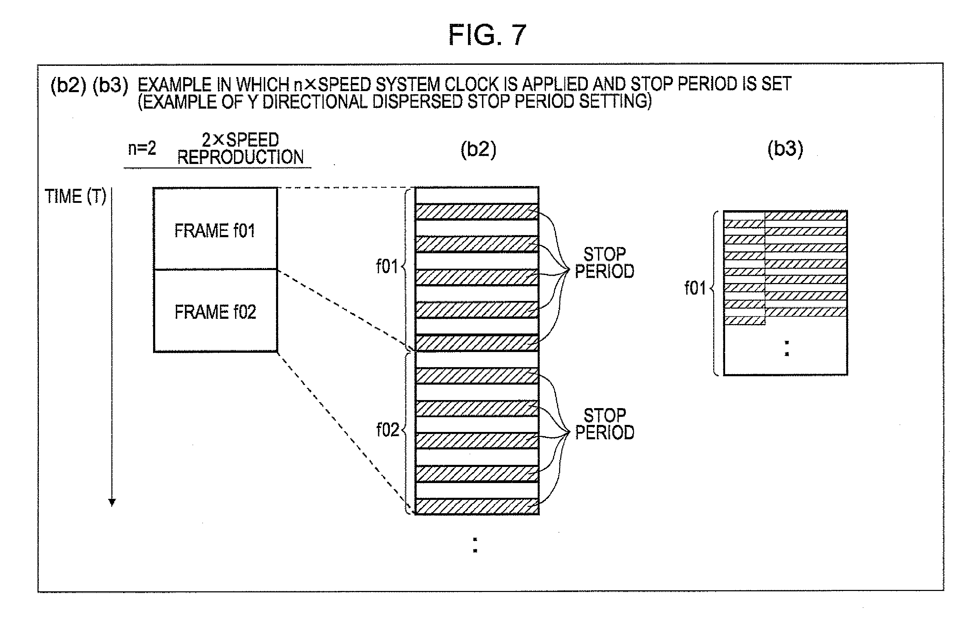

Fig. 7 illustrates an example in which the Y directional dispersed stop period is set. In Fig. 7(b2), a plurality of stop periods are dispersed and set in the Y direction of a frame f01. For example, a stop period and a valid period (white portion) are set for one line or a plurality of lines. Similarly, a plurality of stop periods is dispersed and set in the Y direction with respect to a frame f02. In the example in the figure, the stop period and the valid period (white portion) is 1:1 and n/2×speed reproduction is performed. In the case where n=2, 1×speed reproduction is performed. In Fig. 7(b2), the stop period is set in the unit of one line in a transverse direction of the frame, but, for example, the stop period may be set so as to be generated from the middle of one line as shown in Fig. 7(b3). In the case of setting the dispersed stop period as shown in Fig. 7, according to the length of each stop period or adjustment of intervals, the reproduction speed may be adjusted in the range of 0 to n times.

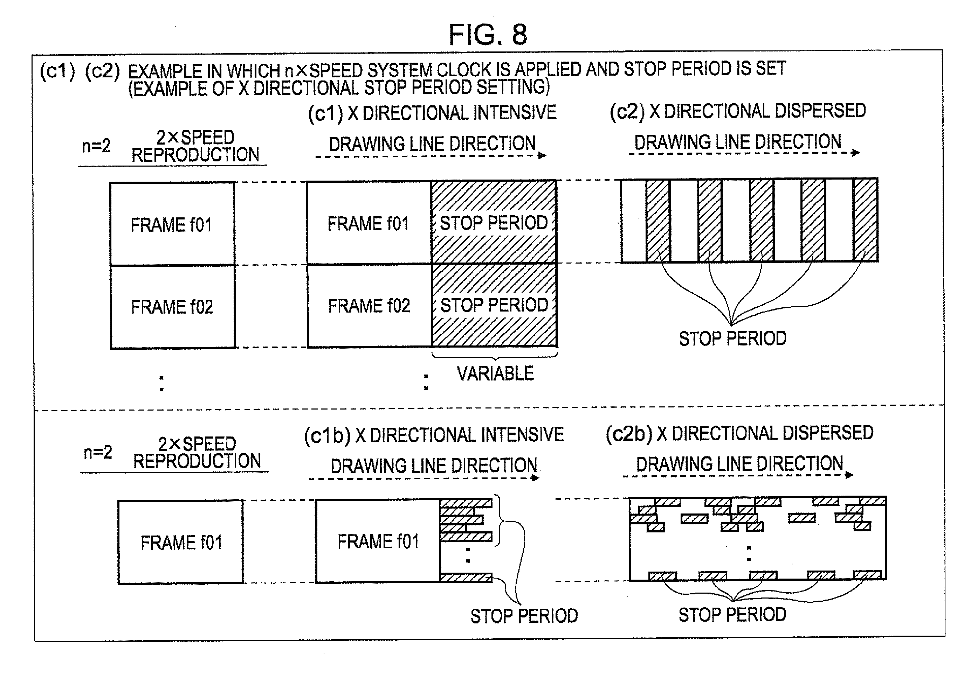

Fig. 8 illustrates examples in which an X directional stop period is set, in which Fig. 8(c1) illustrates an example in which an X directional intensive stop period is set; and Fig. 8(c2) illustrates an example in which an X directional dispersed stop period is set.

In the example as shown in Fig. 8(c1), the stop period having the same period as a drawing period of one line is set after completion of drawing of each line which forms the frame. That is, the valid period and the stop period having the same period as the drawing processing period of one line are alternately set. In the case where the stop period is set as described above, the contents reproduction of n/2×speed may be performed.

As shown as "variable" in Fig. 8(c1), the length of the stop period may be set to a specific value. If the stop period is set to be long, the reproduction speed may be decreased, and if the stop period is set to be short, the reproduction speed may be increased. That is, due to a variety of stop period settings with respect to the input n×speed contents, the contents can be reproduced at a specific reproduction speed of 0 to n×speed.

In the example as shown in Fig. 8(c2), the X directional dispersed stop period is set. That is, a plurality of stop periods is dispersed and set in one line of the frame. In the case of the setting of the dispersed stop period as shown in Fig. 8(c2), according to the length of each stop period or adjustment of intervals, the reproduction speed can be adjusted in the range of 0 to n×speed.

In either case of the X directional intensive stop period in Fig. 8(c1) or the X directional dispersed stop period in Fig. 8(c2), the stop periods may be set as different periods in the unit of each line. The example in which the different stop periods are set in the line unit is illustrated in a lower part in Fig. 8. Fig. 8(c1b) illustrates the X directional intensive stop period; and Fig. 8(c2b) illustrates the X directional dispersed stop period, in which the different stop periods are set in the line unit.

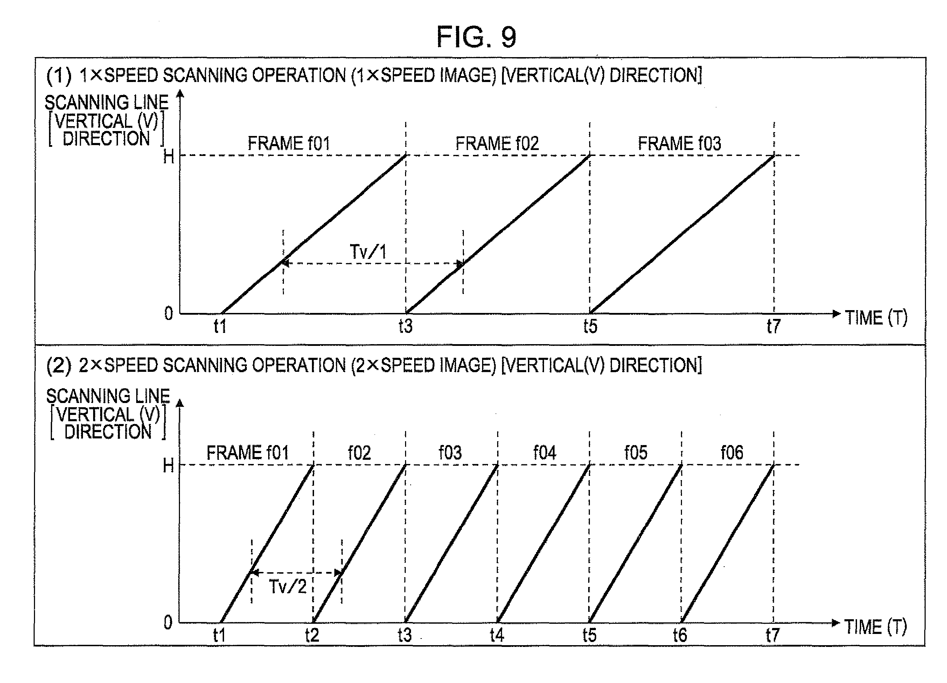

Next, a processing sequence for outputting an image to the display section using the stop period will be described with reference to Fig. 9 and below. Hereinafter, in the case where n=2 and the contents of the 2×speed is generated in the reproduction controller 110 shown in Figs. 3 and 5, a process example thereof will be described.

Fig. 9(1) illustrates a drawing process (scanning operation) in 1×speed reproduction; and Fig. 9(2) illustrates a drawing process (scanning operation) in 2×speed reproduction.

In the 1×speed reproduction in Fig. 9(1), a process example in which the input contents are reproduced as such is shown as a reference. In the 2×speed reproduction in Fig. 9(2), an example is shown in which a clock which is generated by a system clock in which n=2 is received and processed, and then is output in the display section without providing the stop period. In Fig. 9(1) and Fig. 9(2), the transverse axes illustrate time, and the longitudinal axes illustrate a vertical location (0 to H) of a scanning line of the frame.

In the drawing process (scanning operation) in the 1×speed reproduction as shown in Fig. 9(1), a drawing process of a frame f01 is performed in a period of time t1 to t3; a drawing process of a frame f02 is performed in the next period of time t3 to t5; and a drawing process of a frame f03 is performed in a period of time t5 to t7. A drawing interval between the respective frames is [Tv/1]. The Tv corresponds to the display period of one frame in the 1×speed reproduction.

In this respect, Fig. 9(2) is the example of the drawing process in the case where the clock which is generated by the system clock in which n=2 is received and processed in the information reproducing apparatus according to the embodiment shown in Figs. 3 and 5, and then is output in the display section without providing the stop period. Firstly, a drawing process of a frame f01 is performed in a period of time t1 to t2; a drawing process of a frame f02 is performed in the next period of time t2 to t3; and a drawing process of a frame f03 is performed in a period of time t3 to t4. A drawing interval between the respective frames is [Tv/2]. The Tv corresponds to the display period of one frame in the 1×speed reproduction. As described above, in the drawing process in Fig. 9(2), the drawing process of each frame is performed in the half period of the drawing process as shown in Fig. 9(1). As a result, the 2×speed reproduction is performed.

The output information generating section 112 of the reproduction controller 110 of the information reproducing apparatus 100 according to the embodiment generates the example in Fig. 9(2), that is, contents which are capable of the n×speed reproduction. Then, the output information generating section 112 sets the stop period corresponding to a reproduction speed which is designated by a user.

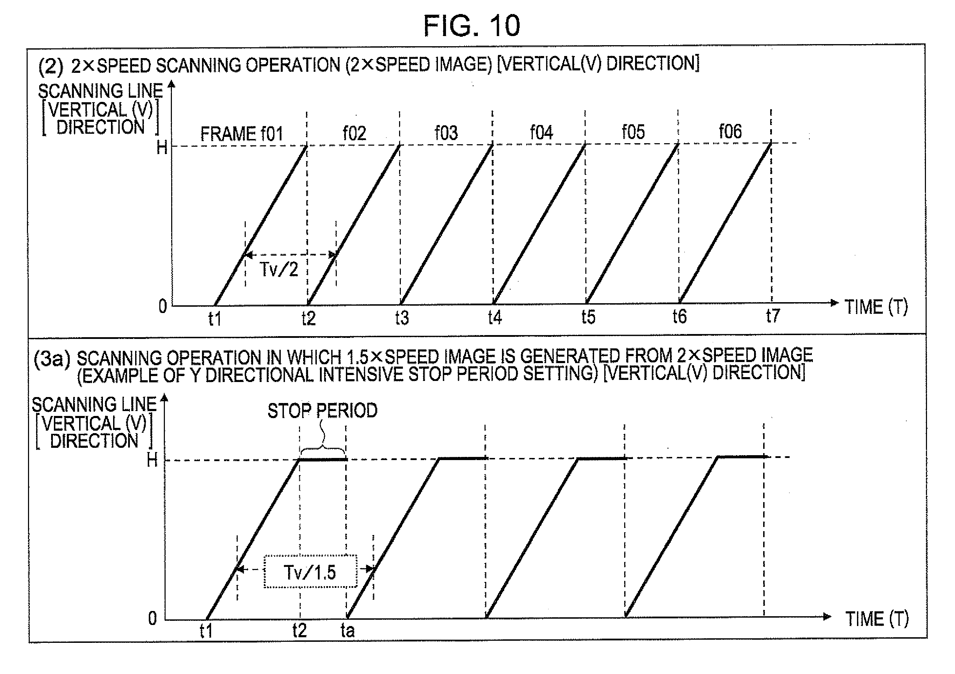

In a case where n=2 and the contents which are stored in the buffer memory 113 are the 2×speed reproduction contents, a setting example of the stop period in a case where 1.5×speed reproduction is designated by the user will be described with reference to Fig. 10 and below.

Fig. 10(2) illustrates a drawing process (scanning operation) in 2×speed reproduction and Fig. 10(3a) illustrates a drawing process (scanning operation) in 1.5×speed reproduction.

The drawing process in Fig. 10(2) is the same process as the drawing process as shown in Fig. 9(2). Here, a drawing process of a frame f01 is performed in a period of time t1 to t2; a drawing process of a frame f02 is performed in the next period of time t2 to t3; and a drawing process of a frame f03 is performed in a period of time t3 to t4.

The drawing process as shown in Fig. 10(3a) is an example in which the stop period is set after the drawing process of each frame. The stop period setting example corresponds to the Y directional intensive stop period as described with reference to Fig. 6(b1).

In the drawing process as shown in Fig. 10(3a), a drawing process of a frame f01 is performed in a period of time t1 to t2, and the next period of time t2 to ta is the stop period. The stop period is a stop period which is set by the output information generating section 112 as shown in Fig. 5, according to the reproduction speed information which is designated by the user.

The stop period information is supplied to the display controller 120 together with the contents of n×speed and is used for setting the driving timing of the display device driving section 123 in the driving timing controller 122. That is, during the stop period, the drawing process of the display device driving section 123 is stopped, under the control of the driving timing controller 122.

In the example in Fig. 10(3a), the period of time t1 to t2 is the valid period other than the stop period, and in this period of time, the drawing process of the frame f01 of the 2×speed contents is performed. However, the next period of time t2 to ta is set as the stop period. In the stop period, the drawing process of the display device driving section 123 is stopped under the control of the driving timing controller 122. After a point of time ta, the stop period terminates and the valid period starts, and thus, the drawing process of the next frame f02 is performed. Thereafter, similarly, the drawing process of each frame and the stop period are alternately repeated.

In this example, for example, the frame f01 is displayed in the period of time t1 to ta through the display section 130. Transition to the frame f02 is performed after the point of time ta. The example shown in Fig. 10(3a) is the example of setting the stop period of the 1.5×speed reproduction, in which t1 to t2:t1 to ta = 1:1.5.

That is, in the drawing sequence shown in Fig. 10(3a), the frame f01 is displayed in the period of time [t1 to ta] which is the period of 1.5 times of the display period [t1 to t2] of the frame f01 in the 2×speed reproduction as shown in Fig. 10(2). Similarly, with respect to the frame thereafter, each frame is displayed in the period of 1.5 times of the frame display period in the 2×speed reproduction as shown in Fig. 10(2). As shown in the figure, the drawing interval between the respective frames is [Tv/1.5]. The Tv corresponds to the display period of one frame in 1×speed reproduction.

If the stop period is set to be long, the reproduction speed is decreased, and if the stop period is set to be short, the reproduction speed is increased. The output information generating section 112 of the reproduction controller 110 shown in Fig. 5 sets the stop period according to, for example, the reproduction speed which is designated by the user and outputs the set stop period to the display controller 120.

The driving timing controller 122 of the display controller 120 intermittently drives the display device driving section 123 as shown in, for example, Fig. 10(3a), according to the stop period information which is generated by the output information generating section 112. Through this process, the contents reproduction of 0 to n×speed is realized.

As described above, the stop period setting example as shown in Fig. 10(3a) corresponds to the setting example of the Y directional intensive stop period as shown in Fig. 6(b1).

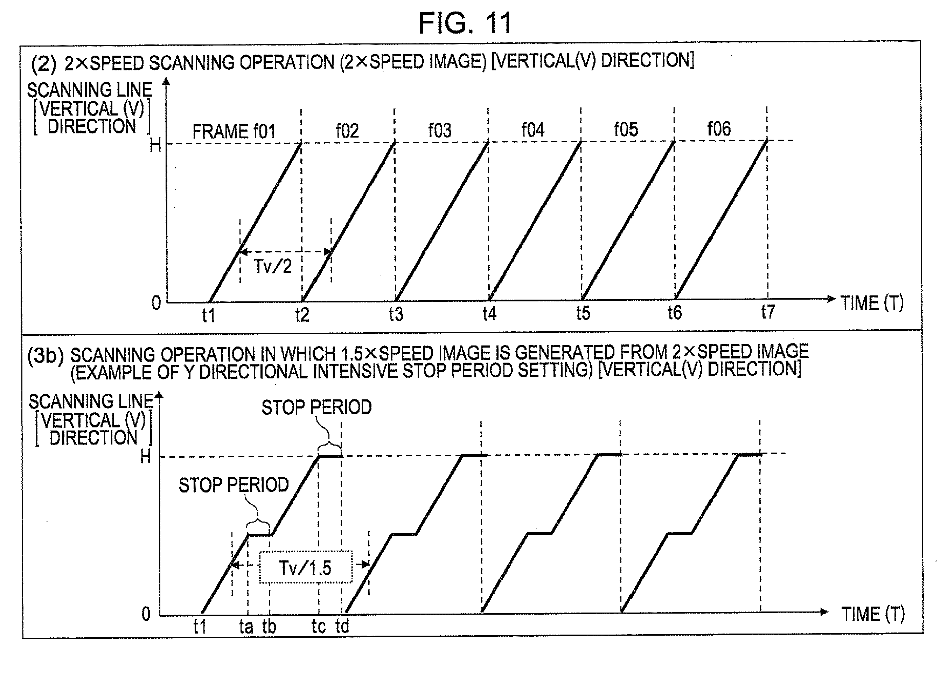

A drawing sequence corresponding to the setting example of the Y directional dispersed stop period setting example shown in Fig. 7(b2) is shown in Fig. 11(3b).

Fig. 11(2) illustrates a drawing process (scanning operation) of 2×speed reproduction; and Fig. 11(3b) illustrates a drawing process (scanning operation) of 1.5×speed reproduction.

The drawing process in Fig. 11(2) is the same process as in the drawing process as shown in Fig. 9(2). Here, a drawing process of a frame f01 is performed in a period of time t1 to t2; a drawing process of a frame f02 is performed in the next period of time t2 to t3; and a drawing process of a frame f03 is performed in a period of time t3 to t4.

The drawing process as shown in Fig. 11(3b) is an example in which stop periods are dispersed and set in the middle of the drawing process of each frame and at the end thereof. The stop period setting example corresponds to the setting example of the Y directional dispersed stop period as described with reference to Fig. 7(b2).

In the example shown in Fig. 11(3b), a period of time t1 to ta is the valid period other than the stop period, and a drawing process of the first half portion of a frame f01 of the 2×speed contents is performed. However, the next period of time ta to tb is set as the stop period. In the stop period, the drawing process of the display device driving section 123 is stopped under the control of the driving timing controller 122. After a point of time tb, the stop period terminates and the valid period starts, and the drawing process of the second half portion of the frame f01 is performed. A period of time tc to td after completion of the drawing of the second half portion of the frame f01 becomes the stop period. After a point of time td, the valid period starts, and a drawing process of the next frame f02 starts. Similarly, with respect to the drawing process of each frame, a process that the stop periods of two times are set is repeated.

In this example, for example, the frame f01 is displayed in a period of time t1 to td in the display section 130. Transition to the frame f02 occurs after the point of time td. The example shown in Fig. 11(3b) is the stop period setting example of 1.5×speed reproduction, in which t1 to t2:t1 to td = 1:1.5.

That is, in the drawing sequence shown in Fig. 11(3b), the frame f01 is displayed in the period of time [t1 to td] which is the period of 1.5 times of the display period [t1 to t2] of the frame f01 in the 2×speed reproduction as shown in Fig. 11(2). Similarly, with respect to the subsequent frames, each frame is displayed in the period of 1.5 times of the frame display period in the 2×speed reproduction as shown in Fig. 11(2). As shown in the figure, the drawing interval between the respective frames is [Tv/1.5]. The Tv corresponds to the display period of one frame in 1×speed reproduction.

In this embodiment, through a process in which each stop period is set to be long, or by increasing the number of the stop periods which are set inside one frame, the reproduction speed may be decreased. Further, through a process in which each stop period is set to be short, or by decreasing the number of stop periods which are set inside one frame, the reproduction speed may be increased. The output information generating section 112 of the reproduction controller 110 shown in Fig. 5 sets the stop period according to, for example, the reproduction speed which is designated by the user and outputs the set stop period to the display controller 120.

The drawing sequences in the setting example of the Y directional intensive stop period and the setting example of the Y directional dispersed stop period have been described with reference to Figs. 9 to 11.

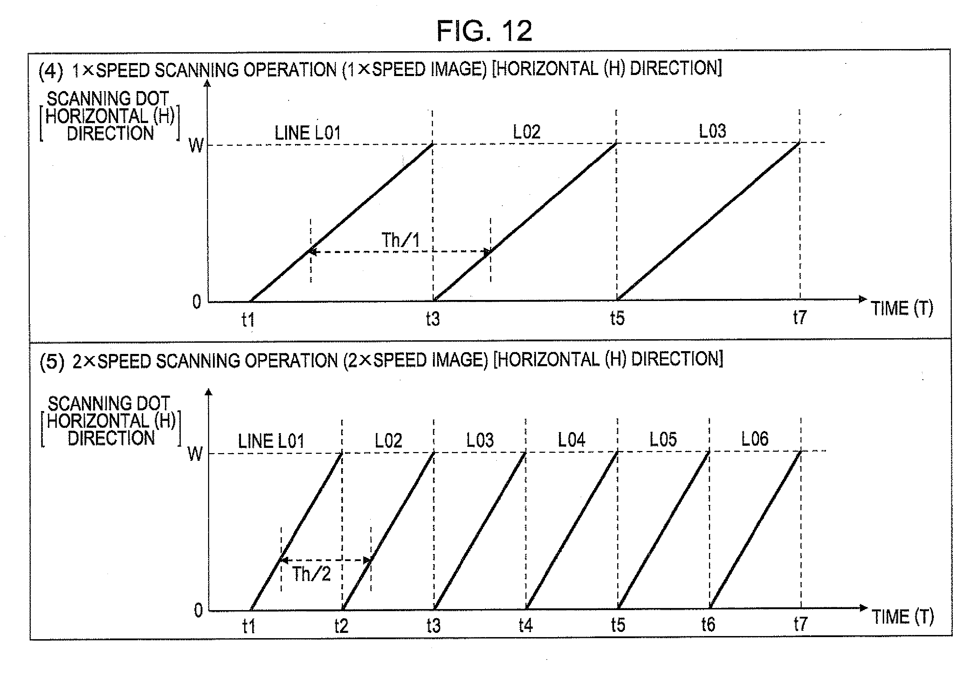

Next, drawing sequences in a setting example of the X directional intensive stop period and a setting example of the X directional dispersed stop period will be described with reference to Figs. 12 to 14.
Fig. 12 illustrates a drawing process sequence of the X direction, that is, one line which forms a frame.
Fig. 12(4) illustrates a drawing process (scanning operation) in 1×speed reproduction; and Fig. 12(5) illustrates a drawing process (scanning operation) in 2×speed reproduction.

In the 1×speed reproduction as shown in Fig. 12(4), a process example in which input contents are reproduced as such is shown as a reference; and in the 2×speed reproduction in Fig. 12(5), an example is shown in which a clock which is generated by a system clock in which n=2 is received and processed, and then is output in the display section without providing the stop period. In Fig. 12(4) and Fig. 12(5), the transverse axes illustrate time, and the longitudinal axes illustrate a location (0 to W) of one scanning line which forms a frame.

In the drawing process (scanning operation) in the 1×speed reproduction as shown in Fig. 12(4), a drawing process of a L01 which is a first line of a frame f01 is performed in a period of time t1 to t3; a drawing process of a second line L02 is performed in the next period of time t3 to t5; and a drawing process of a third line L03 is performed in a period of time t5 to t7. A drawing interval between the respective frames is [Th/1]. Here, the Th corresponds to the drawing period of one line in the 1×speed reproduction.

In this respect, Fig. 12(5) is an example of a drawing process in a case where a clock which is generated by a system clock in which n=2 is received and processed in the information reproducing apparatus according to the embodiment shown in Figs. 3 and 5, and then is output in the display section without providing the stop period. Firstly, a drawing process of a first line L01 of a frame f01 is performed in a period of time t1 to t2; a drawing process of a line L02 is performed in the next period of time t2 to t3; and a drawing process of a line L03 is performed in a period of time t3 to t4. The drawing interval between the respective lines is [Th/2]. Here, the Th corresponds to the drawing period of one line in the 1×speed reproduction. As described above, in the drawing process in Fig. 12(2), the drawing process of each line is performed in the half period of the drawing process as shown in Fig. 12(1). As a result, the 2×speed reproduction is performed.

As described above, the output information generating section 112 of the reproduction controller 110 of the information reproducing apparatus 100 according to the embodiment stores the example in Fig. 12(5), that is, contents which are capable of the n×speed reproduction in the buffer memory 113. Then, the output information generating section 112 sets the stop period corresponding to a reproduction speed which is designated by a user.

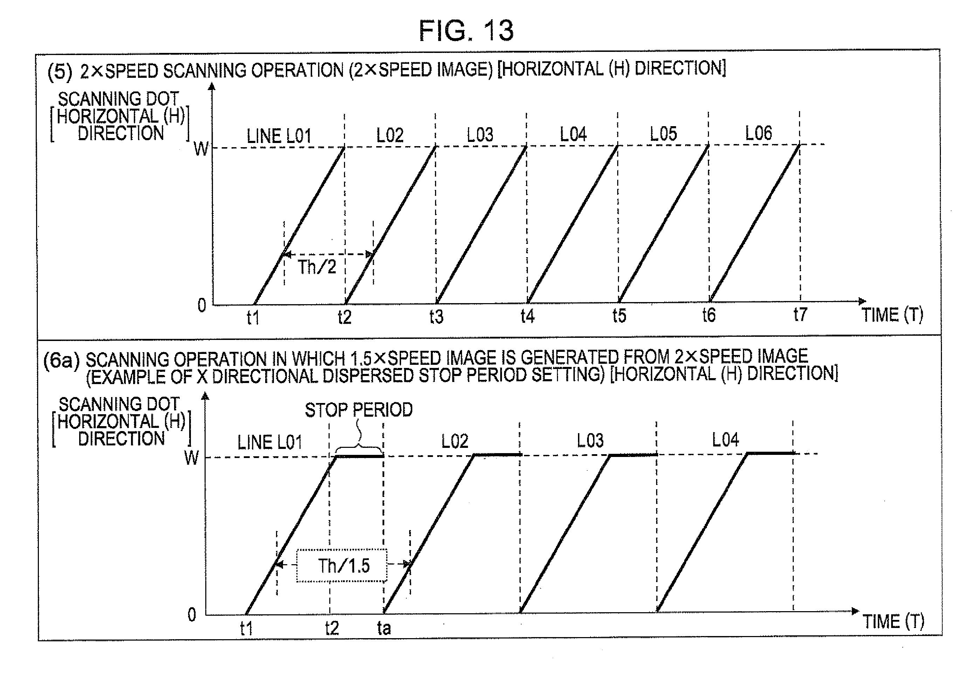

In the case where n=2 and the contents which are stored in the buffer memory 113 are the 2×speed reproduction contents, a setting process example of the stop period in a case where 1.5×speed reproduction is designated by the user will be described with reference to Fig. 13 and below.

Fig. 15(5) illustrates a drawing process (scanning operation) in 2×speed reproduction and Fig. 13(6a) illustrates a drawing process (scanning operation) in 1.5×speed reproduction.

The process in Fig. 13 (5) is the same process as the drawing process as shown in Fig. 12(5). Here, a drawing process of a line L01 of a frame f01 is performed in a period of time t1 to t2; a drawing process of a line L02 is performed in the next time t2 to t3; and a drawing process of a line L03 is performed in a period of time t3 to t4.

The drawing process as shown in Fig. 13(6a) is an example in which the stop period is set after the drawing process of each line. The stop period setting example corresponds to the setting example of the X directional intensive stop period as described with reference to Fig. 8(c1).

In the drawing process as shown in Fig. 13(6a), a drawing process of a line L01 is performed in a period of time t1 to t2, and the next period of time t2 to ta is the stop period. The stop period is a stop period which is set by the output information generating section 112 as shown in Fig. 5, according to the reproduction speed information which is designated by the user.

The stop period information is supplied to the display controller 120 together with the contents of n×speed and is used for setting the driving timing of the display device driving section 123 in the driving timing controller 122. That is, during the stop period, the drawing process of the display device driving section 123 is stopped, under the control of the driving timing controller 122.

In the example in Fig. 13(6a), the period of time t1 to t2 is a valid period other than the stop period, and in this period of time, the drawing process of the line L01 of the 2×speed contents is performed. However, the next period of time t2 to ta is set as the stop period. In the stop period, the drawing process of the display device driving section 123 is stopped under the control of the driving timing controller 122. After a point of time ta, the stop period terminates and the valid period starts, and thus, a drawing process of the next line L02 is performed. Thereafter, similarly, the drawing process of each line and the stop period are alternately repeated.

The example shown in Fig. 13(6a) is the setting example of the stop period of the 1.5×speed reproduction, in which t1 to t2:t1 to ta = 1:1.5.

That is, in the drawing sequence shown in Fig. 13(6a), the drawing of one line is sequentially performed for every period of 1.5 times of the drawing period of one line in the 2×speed reproduction as shown in Fig. 13(2). As shown in the figure, the drawing interval between the respective lines is [Th/1.5]. Here, the Th corresponds to the drawing period of one line in 1×speed reproduction.

If the stop period is set to be long, the reproduction speed is decreased, and if the stop period is set to be short, the reproduction speed is increased. The output information generating section 112 of the reproduction controller 110 as shown in Fig. 5 sets the stop period according to, for example, the reproduction speed which is designated by the user and outputs the set stop period to the display controller 120.

The driving timing controller 122 of the display controller 120 intermittently drives the display device driving section 123 as shown in, for example, Fig. 13(6a), according to the stop period information which is generated by the output information generating section 112. Through this process, the contents reproduction of 0 to n×speed is realized.

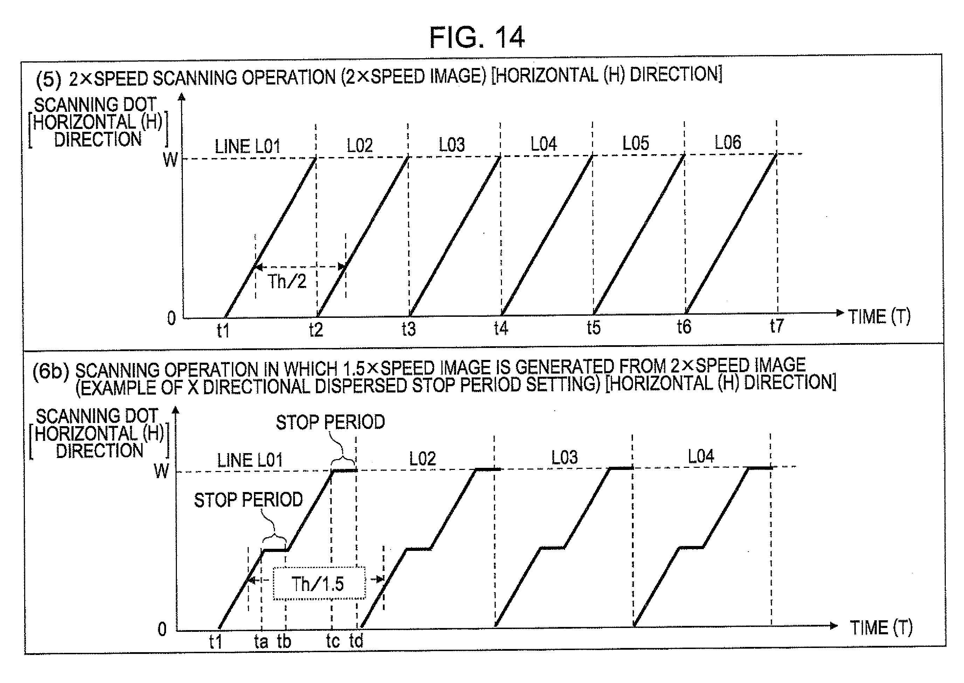

A drawing sequence corresponding to the setting example of the X directional dispersed stop period as described with reference to Fig. 9(c2) is shown in Fig. 14(6b).

Fig. 14(5) illustrates a drawing process (scanning operation) of 2×speed reproduction; and Fig. 14(6b) illustrates a drawing process (scanning operation) of 1.5×speed reproduction.

The process in Fig. 14(5) is the same process as in the drawing process as shown in Fig. 12(5). Here, a drawing process of a line L01 is performed in a period of time t1 to t2; a drawing process of a line L02 is performed in the next period of time t2 to t3; and a drawing process of a line L03 is performed in a period of time t3 to t4.

The drawing process as shown in Fig. 14(6b) is an example in which stop periods are dispersed and set in the middle of a drawing process of each line and at the end thereof. The stop period setting example corresponds to the setting example of the X directional dispersed stop period as described with reference to Fig. 8(c2).

In the example as shown in Fig. 14(6b), the period of time t1 to ta is a valid period other than the stop period, and a drawing process of the first half portion of a first line L01 which forms a frame of 2×speed contents is performed. However, the next period of time ta to tb is set as the stop period. In the stop period, the drawing process of the display device driving section 123 is stopped under the control of the driving timing controller 122. After a point of time tb, the stop period terminates and the valid period starts, and a drawing process of the second half portion of the line L01 is performed. A period of time tc to td after completion of the drawing of the second half portion of the line L01 becomes a stop period. After a point of time td, a valid period starts, and a drawing process of the next line L02 starts. Similarly, with respect to the drawing process of each line, the process that the stop periods of two times are set is repeated.

The example as shown in Fig. 14(6b) is the stop period setting example of 1.5×speed reproduction, in which t1 to t2:t1 to td = 1:1.5.

That is, in the drawing sequence shown in Fig. 14 (6b), the drawing of one line is sequentially performed for every period of 1.5 times of the drawing period of one line in the 2×speed reproduction as shown in Fig. 14(2). As shown in the figure, the drawing interval between the respective lines is [Th/1.5]. Here, the Th corresponds to the drawing period of one line in 1×speed reproduction.

In this embodiment, through a process in which each stop period is set to be long, or by increasing the number of the stop periods which are set inside one line, the reproduction speed may be decreased. Further, through a process in which each stop period is set to be short, or by decreasing the number of stop periods which are set inside one line, the reproduction speed may be increased. The output information generating section 112 of the reproduction controller 110 as shown in Fig. 5 sets the stop period according to, for example, the reproduction speed which is designated by the user and outputs the set stop period to the display controller 120.

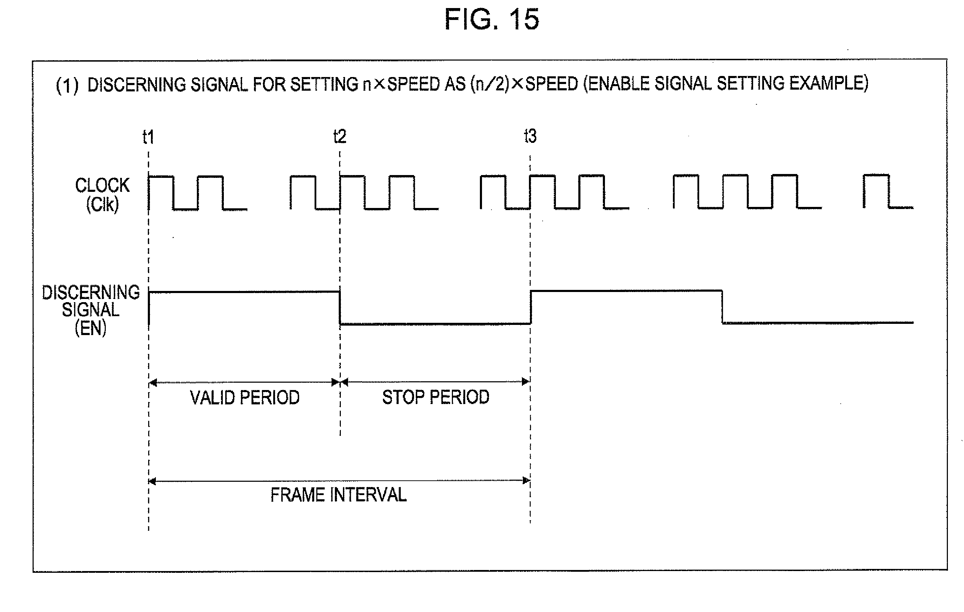

Next, an example of a relationship of a clock and a stop period will be described with reference to Fig. 15 and below. As described above, for example, the stop period is set by the output information generating section 112 of the reproduction controller 110 by receiving reproduction speed information which is designated by a user from the user IF 140.

The stop period which is set by the output information setting section 112 is set as, for example, a stop period discerning signal (enable signal) as shown in Fig. 15. Fig. 15 illustrates examples of a clock signal which is supplied by a system clock 150 and the stop period discerning signal (enable signal) which is generated by the output information generating section 112.

The output information generating section 112 of the reproduction controller 110 determines a stop period which is demanded for setting of a designation reproduction speed according to the reproduction speed designation information which is input through, for example, the user interface 140, and then generates the stop period discerning signal for discerning the determined stop period.

The example of the stop period discerning signal (enable signal) which is generated by the output information generating section 112 is shown in Fig. 15. That is, this is the stop period discerning signal (enable signal) in which a valid period and an invalid period of the clock signal which controls a processing timing of the display controller 120 are set. The output information generating section 112 generates the stop period discerning signal (enable signal) in which the stop period is set as the invalid period.

The driving timing controller 122 of the display controller 120 discerns the valid period and the invalid period of the input clock according to the stop period discerning signal (enable signal), and in the valid period, an image signal output process with respect to the display section 130 is performed, and in the invalid period, a process of stopping the image signal output process with respect to the display section 130 is performed.

The example as shown in Fig. 15 is a setting example of the stop period discerning signal (enable signal) corresponding to the Y directional intensive stop period setting example, that is, is a setting example of the stop period discerning signal (enable signal) corresponding to the Y directional intensive stop period setting example as described with reference to Fig. 6(b1) or Fig. 10(3a). The example shown in Fig. 15 is an example of a signal in a case where the n/2×speed reproduction is performed.

A period of time t1 to t2 is the valid period and a period of time t2 to t3 is the stop period. The stop period discerning signal (enable signal) is set as a signal indicating "1", for example, in the valid period of time t1 to t2, and is set as a signal indicating "0" in the stop period of time t2 to t3. The example shown in the figure represents the case of n/2×speed reproduction. Here, the period of time t1 to t2 is the period of time t2 to t3, and accordingly, the stop period discerning signal (enable signal) is set. This example corresponds to the example shown in Fig. 6(b1).

For example, in the valid period of time t1 to t2, a drawing process of a frame f01 is performed, and after the completion of the drawing process of the frame f01, the period of time t2 to t3 becomes the stop period. In this stop period, the frame f01 is continuously displayed in the display section 130. Then, after a point of time t3, the valid period starts, and display of a frame f02 starts. Thereafter, similarly, the stop period and the valid period are repeated.

The output information generating section 112 generates the stop period discerning signal (enable signal) as shown in Fig. 15 in a case where the reproduction speed designation information of n/2×speed is input, for example, through the user IF 140. The generated stop period discerning signal (enable signal) is output to the display controller 120 together with the n×speed contents.

The driving timing controller 122 of the display controller 120 drives the display device driving section 123 only in the valid period of the stop period discerning signal (enable signal), and stops the driving in the stop period. According to such a process, contents reproduction of 0 to n×speed may be performed on the basis of the n×speed contents.

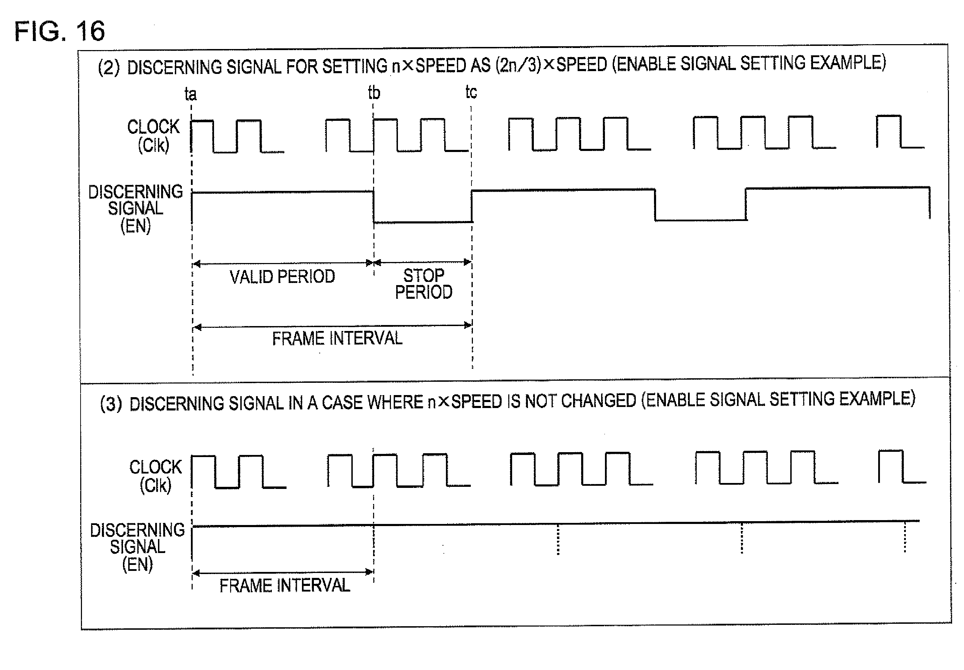

Next, Fig. 16(2) illustrates an example of a stop period discerning signal (enable signal) in the case of 1.5×speed reproduction. In the example shown in Fig. 16(2), a period of time ta to tb is a valid period, and a period of time tb to tc is a stop period. The stop period discerning signal (enable signal) is set as a signal indicating "1" in the valid period of time ta to tb; and is set as a signal indicating "0" in the stop period of time tb to tc. The example shown in the figure is a case where n=2 and the 1.5×speed reproduction is performed.

In this case, the output information generating section 112 sets the stop period discerning signal (enable signal), in which the period of time ta to tb:the period of time ta to tc = 1:1.5.

The example shown in Fig. 16(2) is the example of the stop period discerning signal (enable signal) corresponding to the Y directional intensive stop period setting example as described with reference to Fig. 6(b1) or Fig. 10(3a).

The example of the stop period discerning signal (enable signal) shown in Fig. 16(3) is an example of a case where the stop period is not set. In a case where a user wants n×speed reproduction, the output information generating section 112 outputs the stop period discerning signal (enable signal) in which all periods are set as the valid periods, without setting the stop period, to the display controller 120.

In this case, the driving timing controller 122 of the display controller 120 drives the display device driving section 123 according to the clock signal and outputs the n×speed contents as such to the display section 130.

The example of the stop period discerning signal (enable signal) as described with reference to Figs. 15 and 16 corresponds to the Y directional intensive stop period setting example. As described above, as the setting type of the stop period, there are four patterns of stop period setting types: the X directional intensive stop period setting type; the X directional dispersed stop period setting type; the Y directional intensive stop period setting type; and the Y directional dispersed stop period setting type.

By setting the valid period as "1" and setting the stop period as "0" according to the respective setting types, the stop period discerning signal (enable signal) is generated in the output information generating section 112.

The information reproducing apparatus may use any one or any combination of the four patterns of stop period setting types, that is, the X directional intensive stop period setting type; the X directional dispersed stop period setting type; the Y directional intensive stop period setting type; and the Y directional dispersed stop period setting type.

### 2. Example of a process in which a stop period discerning signal is omitted and the stop period discerning is performed according to a setting change of a synchronization signal (Sync) (second embodiment)

In the above described embodiment, the output information generating section 112 in the reproduction controller 110 of the information reproducing apparatus 100 as shown in Figs. 3 and 5 generates the stop period discerning signal (enable signal) as described with reference to Fig. 15 or Fig. 16 according to, for example, the reproduction speed which is designated by the user, and supplies the generated signal to the display controller 120 together with the contents of n×speed including an image. The driving timing controller 122 of the display controller 120 intermittently drives the display device driving section 123 according to the stop period discerning signal (enable signal).

However, the stop period discerning signal (enable signal) is a signal which has not been used in the reproducing apparatus in the related art thus far, and in a case where a new signal is used, a process configuration for transmitting the new signal or a new process configuration for discerning the signal is demanded.

In the embodiment hereinafter, without applying the new signal, a process example in which a stop period is discerned using a synchronization signal (Hsync, Vsync) which is used in the image display device in the related art will be described.

In the process example which will be described hereinafter, the output information generating section 112 inside the reproduction controller 110 of the information reproducing apparatus 100 as shown in Fig. 5 performs setting change of a synchronization signal according to, for example, a reproduction speed which is designated by a user. The synchronization signal in which its setting is changed is output to the display controller 120 together with n×speed contents. The driving timing controller 122 of the display controller 120 discerns a stop period according to a setting location of the synchronization signal and intermittently drives the display device driving section 123.

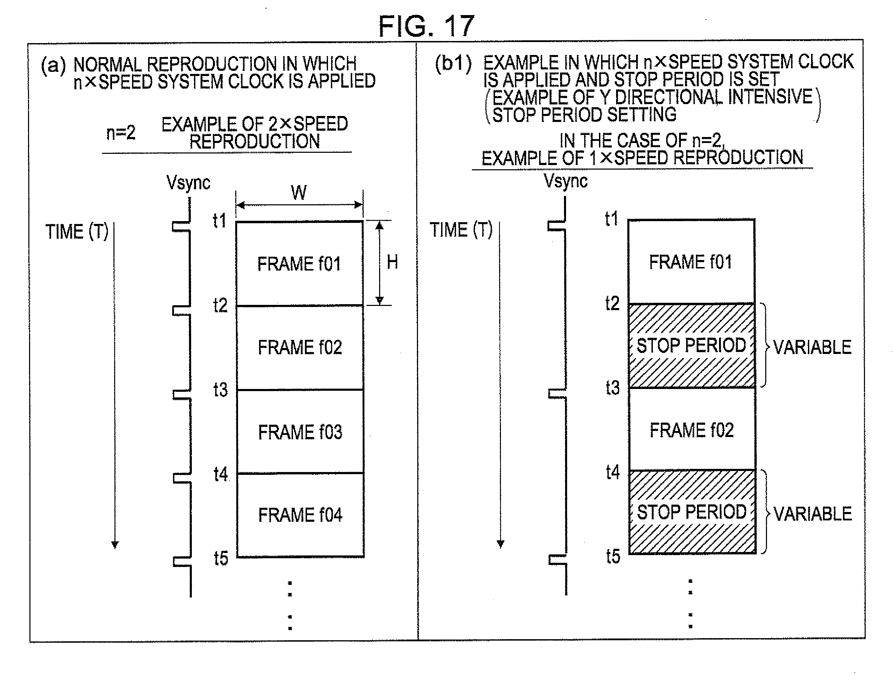

A specific process example in the embodiment will be described with reference to Fig. 17 and below.

Fig. 17 illustrates a setting example of a Y directional intensive stop period corresponding to Fig. 6 in the first embodiment. In the first embodiment, in a case where a stop period, for example, as shown in Fig. 17(b1) is set, the output information generating section 112 of the reproduction controller 110 as shown in Fig. 5 generates, for example, the discerning signal (enable signal), for example, as described with reference to Fig. 15.

In this respect, in this embodiment, in the case where the stop period as shown in Fig. 17(b1) is set, the output information generating section 112 performs a process of adjusting the setting of the synchronization signal, without generating the discerning signal (enable signal) as described with reference to Fig. 15. In an example as shown in Fig. 17(b2), a setting location of a vertical synchronization signal (Vsync) is adjusted.

In a case where the stop period is not set, a frame configuration in which the nxspeed reproduction as shown in Fig. 17(a) is performed is formed, but in this case, the vertical synchronization signal (Vsync) is set in a frame transition timing location. The vertical synchronization signal (Vsync) as shown in Fig. 17 (a) is set in the frame transition locations of points of time t1, t2, t3, t4 and t5.

In this respect, in a case where a stop period as shown in Fig. 17(b1) which is a setting of n/2xspeed is set, the output information generating section 112 of the reproduction controller 110 as shown in Fig. 5 sets a vertical synchronization signal (Vsync) in locations of points of time t1 and t3 as shown in Fig. 17(b1). That is, the vertical synchronization signal (Vsync) is not set in locations of points of time t2 and t4.

The output information generating section 112 sets such a vertical synchronization signal (Vsync) and outputs the set signal to the display controller 120 together with image data of nxspeed.

The driving timing controller 122 of the display controller 120 measures a setting location of the vertical synchronization signal (Vsync) using a counter for counting the number of clocks which are input to the display controller 120. The driving timing controller 122 stores a setting interval (reference count value) of the basic vertical synchronization signal (Vsync) of the n×speed contents which is original data, in a memory in advance.

The driving timing controller 122 determines that the stop period is set in a case where the count value corresponding to intervals of the vertical synchronization signal (Vsync) of data which is received from the reproduction controller 110 exceeds the reference count value. For example, in the example as shown in Fig. 17(b1), counting of the number of clocks from the vertical synchronization signal (Vsync) of the point of time t1 starts, and at the point of time t2, the counted value comes to exceed the reference count value. The driving timing controller 122 determines a period from the point of time exceeding the reference count value to the generating point of time (t3) of the vertical synchronization signal (Vsync) as the stop period.

The driving timing controller 122 performs a process of stopping driving of the display device driving section 123 in the stop period. As a result, as shown in Fig. 17(b1), a display process of a frame f01 is performed in a period of time t1 to t2, and then, the driving timing controller 122 stops the driving of the display device driving section 123 in a stop period of time t2 to t3. A frame f01 is displayed in the display section 130 as it is. Then, a frame f02 is displayed in a period of time t3 to t4, and then, the frame f02 is displayed in the display section 130 as it is in a stop period of time t4 to t5.

In this way, in this embodiment, since the configuration in which the stop period is discerned using the synchronization signal (Sync) is employed, it is not necessary to add the new discerning signal as in the first embodiment.

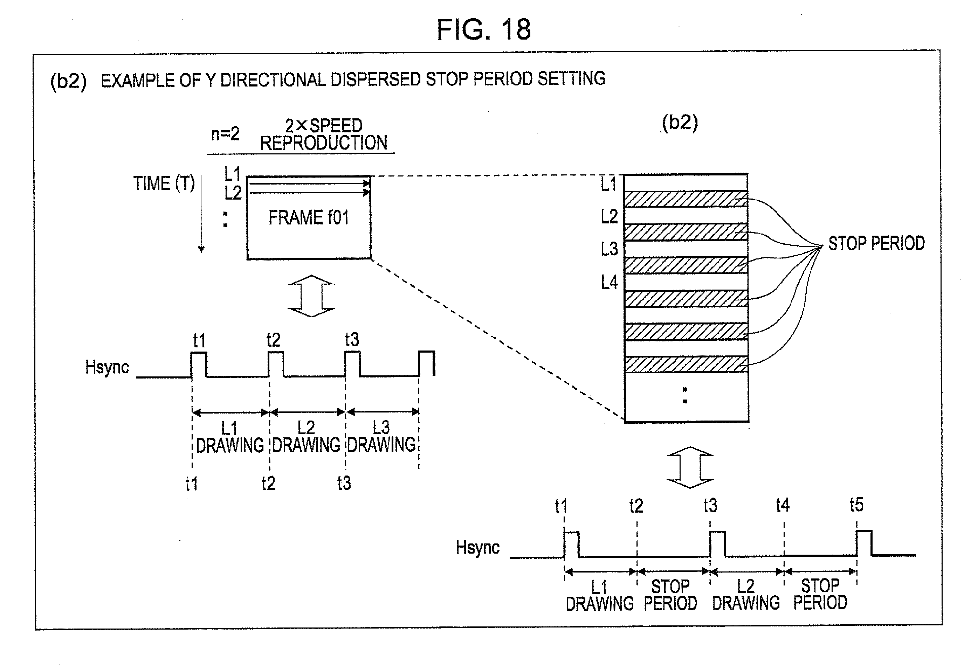

The process as described with reference to Fig. 17 is a process example in which the stop period discerning is performed using the vertical synchronization signal (Vsync), but a process example in which discerning of the stop period using a horizontal synchronization signal (Hsync) will be described with reference to Fig. 18.

Fig. 18 illustrates the same stop period setting example as in the setting example of the Y directional dispersed stop period as described with reference to Fig. 7 in the first embodiment.

As shown in the left side of Fig. 18, in the case of nxspeed reproduction (n=2), display of each line of a frame is processed by discerning delimitation of each line data using the horizontal synchronization signal (Hsync).

A data display process of a line L1 is performed in a horizontal synchronization signal (Hsync) section of a period of time t1 to t2, and a data display process of a line L2 is performed in a horizontal synchronization signal (Hsync) section of a period of time t2 to t3. In this case, the display process is a data display in which the stop period is not set, and in this respect, nxspeed reproduction is performed.

An example as shown in Fig. 18 (b2) (in the right side of Fig. 18) is an example of n/2xspeed reproduction. Here, a stop period is alternately set between respective lines. In this case, the output information generating section 112 of the reproduction controller 110 as shown in Fig. 5 sets a horizontal synchronization signal (Hsync) in locations of points of time t1 and t3, as shown in Fig. 18(b2). That is, the horizontal synchronization signal (Hsync) is not set in locations of points of time t2 and t4.

The output information generating section 112 sets such a horizontal synchronization signal (Hsync) and outputs the set signal to the display controller 120 together with nxspeed image data.

The driving timing controller 122 of the display controller 120 measures a setting location of the horizontal synchronization signal (Hsync) using a counter for counting the number of clocks which are input to the display controller 120. The driving timing controller 122 stores a setting interval (reference count value) of the basic horizontal synchronization signal (Hsync) of the nxspeed contents which is original data, in a memory in advance.

The driving timing controller 122 determines that the stop period is set in a case where the count value corresponding to intervals of the horizontal synchronization signal (Hsync) of data which is received from the reproduction controller 110 exceeds the reference count value. For example, in the example as shown in Fig. 18(b2), counting of the number of clocks from the horizontal synchronization signal (Hsync) at a point of time t1 starts, and the counted value comes to exceed the reference count value at a point of time t2. The driving timing controller 122 determines a period from the point of time exceeding the reference count value to the generating point of time (t3) of the horizontal synchronization signal (Hsync) as the stop period.

The driving timing controller 122 performs a process of stopping driving of the display device driving section 123 in the stop period. As a result, as shown in Fig. 18(b2), a display process of a line L1 is performed in a period of time t1 to t2, and then, the line display is stopped in a stop period of time t2 to t3. Thereafter, a display process of a line L2 is performed in a period of time t3 to t4, and then, the line display process is stopped in a stop period of time t4 to t5. As a result, the display process of reproduction data of n/2xspeed is performed.

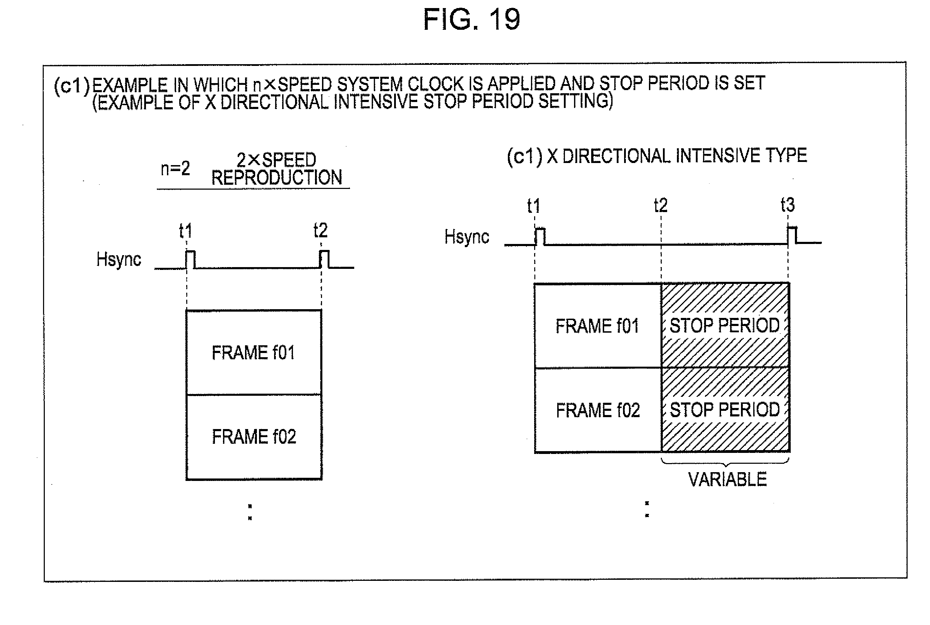

Next, a usage configuration of a synchronization signal in a setting example of an X directional intensive stop period will be described with reference to Fig. 19.

Fig. 19 illustrates the same stop period setting example in the setting example of the X directional intensive stop period as described with reference to Fig. 8 in the previous embodiment. As shown in the left side of Fig. 19, in the case of nxspeed reproduction (n=2), display of each line of a frame is processed by discerning delimitation of each line data according to a horizontal synchronization signal (Hsync).

An example as shown in Fig. 19(c1) (the right side in Fig. 19) is an example of n/2xspeed reproduction. Here, a stop period is alternately set between respective lines. In this case, the output information generating section 112 of the reproduction controller 110 as shown in Fig. 5 sets a horizontal synchronization signal (Hsync) in locations of points of time t1 and t3, as shown in Fig. 19(c1). That is, the horizontal synchronization signal (Hsync) is not set in locations of points of time t2.

The output information generating section 112 sets such a horizontal synchronization signal (Hsync) and outputs the set signal to the display controller 120 together with nxspeed image data.

The driving timing controller 122 of the display controller 120 measures a setting location of the horizontal synchronization signal (Hsync) using a counter for counting the number of clocks which are input to the display controller 120. The driving timing controller 122 stores a setting interval (reference count value) of the basic horizontal synchronization signal (Hsync) of nxspeed contents which is original data, in a memory in advance.

The driving timing controller 122 determines that the stop period is set in a case where the count value corresponding to the intervals of the horizontal synchronization signal (Hsync) of data which is received from the reproduction controller 110 exceeds the reference count value. For example, in the example as shown in Fig. 19(c1), counting of the number of clocks from the horizontal synchronization signal (Hsync) at the point of time t1 starts, and the counted value comes to exceed the reference count value at the point of time t2. The driving timing controller 122 determines a period from the point of time exceeding the reference count value to the generating point (t3) of time of the horizontal synchronization signal (Hsync) as the stop period.

The driving timing controller 122 performs a process of stopping driving of the display device driving section 123 in the stop period. As a result, as shown in Fig. 19(c1), a display process of a line L1 is performed in a period of time t1 to t2, and then, the line display is stopped in a stop period of time t2 to t3. Thereafter, a display process of a line L2 is performed in a period of time t3 to t4, and then, the line display process is stopped in a period of time t4 to t5. As a result, the display process of reproduction data of n/2xspeed is performed.

In this way, in this embodiment, since the configuration in which the stop period is discerned using the synchronization signal (Sync) is employed, it is not necessary to add the new discerning signal as in the previous embodiment.

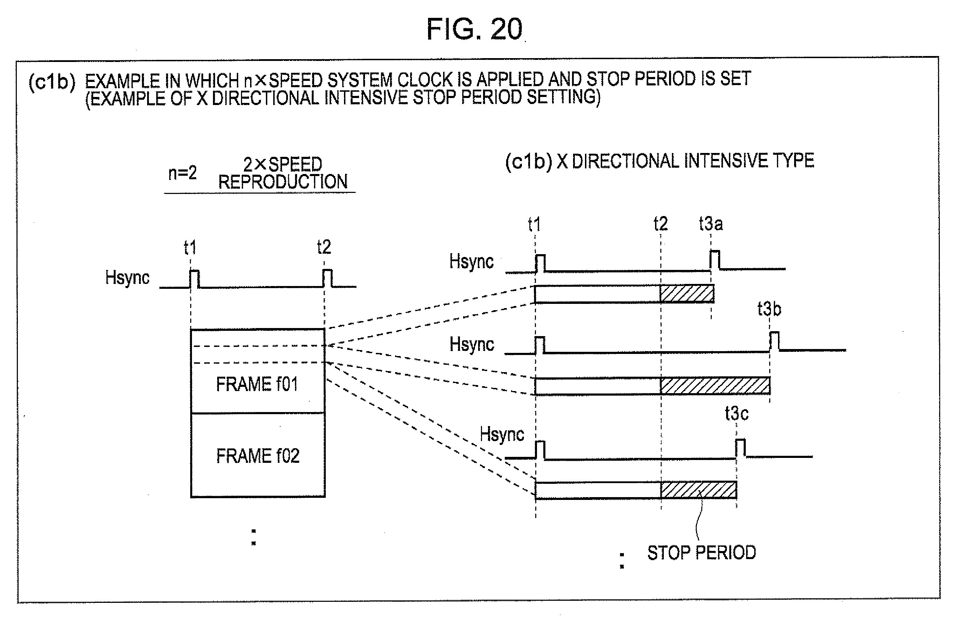

As described with reference to Fig. 8, in the case where the stop period is set in the X direction, the stop period may be set as different periods in the unit of each line. A setting example of a horizontal synchronization signal (Hsync) in the case where the stop period is set as different periods in the unit of each line is shown in Fig. 20.

Fig. 20(c1b) illustrates a setting example of the stop period corresponding to Fig. 8(c1b). Here, the stop period is differently set in the line unit. In this case, the output information generating section 112 of the reproduction controller 110 as shown in Fig. 5 sets a period of time t1 to t3 of a horizontal synchronization signal (Hsync) according to the stop period in the unit of each horizontal line, as shown in Fig. 20(c1b). A period of the horizontal synchronization signal (Hsync) of a first line is set as t1 to t3a; a period of the horizontal synchronization signal (Hsync) of the next line is set as t1 to t3b; and a period of the horizontal synchronization signal (Hsync) of the next line is set as t1 to t3c. The horizontal synchronization signal (Hsync) is not set in a location of a point of time t2. Here, in the line in which the stop period is not set, the horizontal synchronization signal (Hsync) in the location of the point of time t2 is set.

The output information generating section 112 sets such a horizontal synchronization signal (Hsync) and outputs the set signal to the display controller 120 together with nxspeed image data.

The driving timing controller 122 of the display controller 120 measures a setting location of the horizontal synchronization signal (Hsync) in the unit of each line, using a counter for counting the number of clocks which are input to the display controller 120. The driving timing controller 122 determines that the stop period is set in a case where a count value corresponding to the intervals of the horizontal synchronization signal (Hsync) of data which is received from the reproduction controller 110 exceeds the reference count value. For example, in the example as shown in Fig. 20, different stop periods are set in the unit of each line.

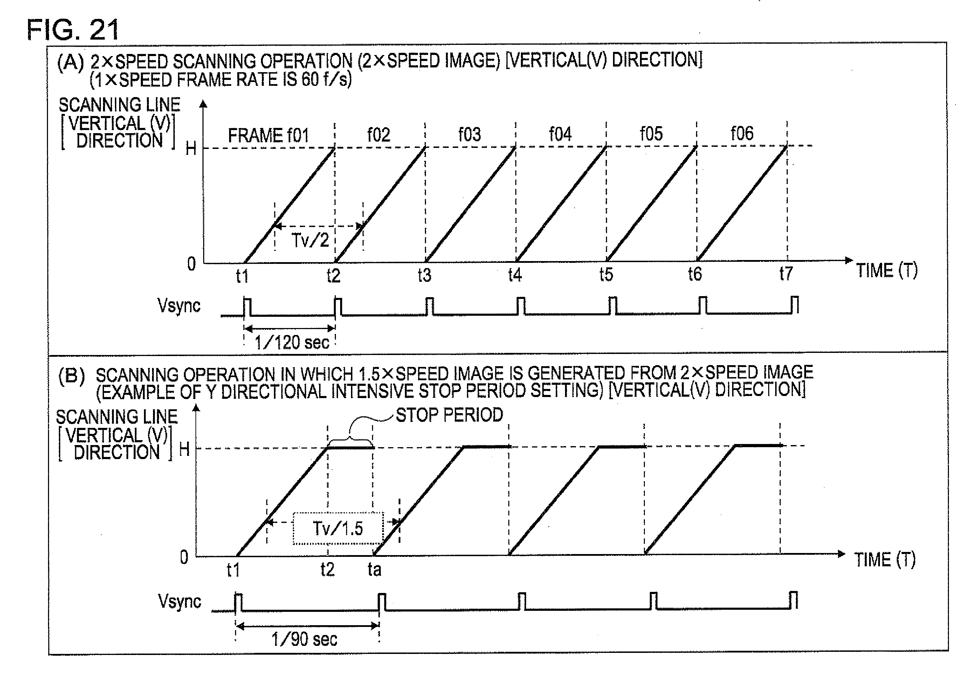

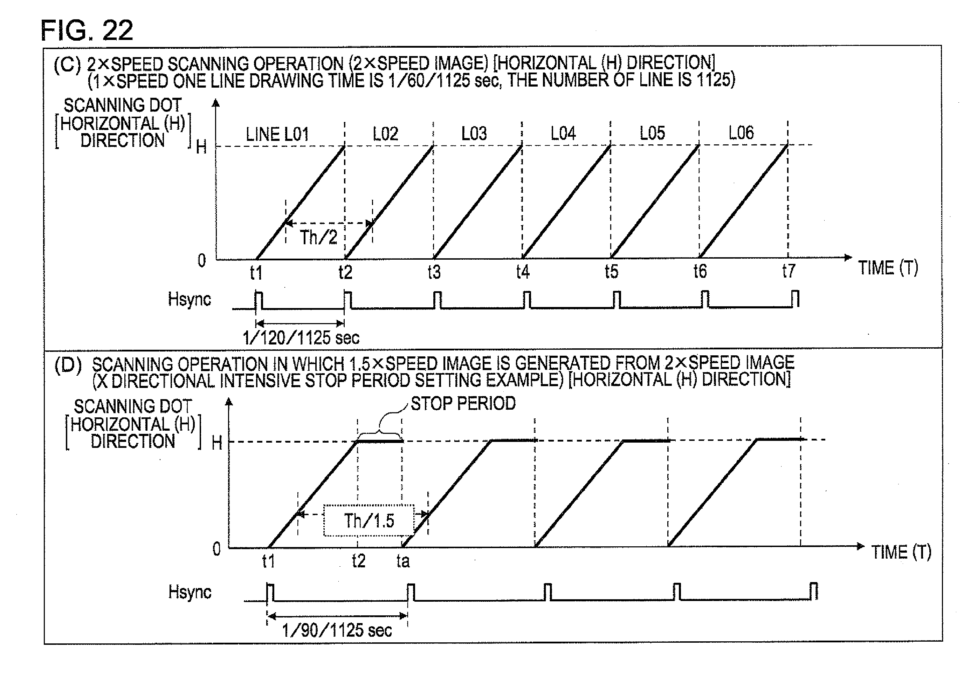

Next, a relationship between a stop period and a synchronization signal will be described with reference to Figs. 21 and 22.

Fig. 21 illustrates a relationship between a stop period and a vertical synchronization signal (Vsync); and Fig. 22 illustrates a relationship between a stop period and a horizontal synchronization signal (Hsync).

Firstly, the relationship between the stop period and the vertical synchronization signal (Vsync) will be described with reference to Fig. 21. Fig. 21(A) illustrates a process in a case where the stop period is not set; and Fig. 21(B) illustrates a process in a case where the stop period is set.

Each of Figs. 21(A) and 21(B) illustrates a graph showing a frame output process sequence where the transverse axis represents time (T) and the longitudinal axis represents scanning (vertical (V) direction), and illustrates a setting timing of the vertical synchronization signal (Vsync).

In nxspeed reproduction in the case where the stop period is not set, an output process of a frame f01 between the vertical synchronization signals (Vsync) of a period of time t1 to t2 is performed; an output process of a frame f02 between the vertical synchronization signals (Vsync) of a period of time t2 to t3 is performed; and an output process of a frame f03 between the vertical synchronization signals (Vsync) of a period of time t3 to t4 is performed. Thereafter, similarly, drawing processes of respective frames are continuously performed.

This example is an example of 2xspeed reproduction in which n is 2, in which an interval of the respective vertical synchronization signals is 1/120sec. Here, a frame rate of 1xspeed reproduction is 60 frames/sec.

Further, in the example as shown in Fig. 21(B) where the stop period is set, after an output process of a frame f01 in a period of time t1 to t2 is performed, a period of time t2 to ta becomes a stop period.

The driving timing controller 122 of the display controller 120 as shown in Fig. 5 sets a point of time after the point of time t2 as the stop period since the next vertical synchronization signal (Vsync) is not detected at the point of time t2. Then, if the vertical synchronization signal (Vsync) is detected at a point of time ta, display of the next frame starts.

The stop period setting example as shown in Fig. 21(B) corresponds to 1.5xspeed reproduction, in which an interval of the vertical synchronization signals (Vsync) is 1/90 sec. The interval is set by the output information generating section 112 of the reproduction controller 110 as shown in Fig. 5.

The driving timing controller 122 of the display controller 120 discerns the stop period according to the above described setting of the vertical synchronization signal (Vsync) and performs a reproduction process at various reproduction speeds.

Next, a relationship between the stop period and the horizontal synchronization signal (Hsync) will be described with reference to Fig. 22. Fig. 22(A) illustrates a process in a case where the stop period is not set; and Fig. 22(B) illustrates a process in a case where the stop period is set.

Each of Figs. 22(A) and 22(B) illustrates a graph showing a line output process sequence where the transverse axis represents time (T) and the longitudinal axis represents scan dot (horizontal (H) direction), and illustrates a setting timing of the horizontal synchronization signal (Hsync).

In nxspeed reproduction in the case where the stop period is not set, an output process of a line L01 between the horizontal synchronization signals (Hsync) of a period of time t1 to t2 is performed; an output process of a line L02 between the horizontal synchronization signals (Hsync) of a period of time t2 to t3 is performed; and an output process of a line L03 between the horizontal synchronization signals (Hsync) of a period of time t3 to t4 is performed. Thereafter, similarly, drawing processes of respective lines are continuously performed.

This example is an example of 2xspeed reproduction in which n is 2, in which an interval of the respective horizontal synchronization signals is 1/120/1125sec. Here, a frame rate of 1xspeed reproduction is 60 frames/sec, and the number of lines in one frame is 1125.

Further, in the example as shown in Fig. 22(B) where the stop period is set, after an output process of a line

L01 in a period of time t1 to t2 is performed, a period of time t2 to ta becomes a stop period.

The driving timing controller 122 of the display controller 120 as shown in Fig. 5 sets a point of time after the point of time t2 as the stop period since the next horizontal synchronization signal (Hsync) is not detected at the point of time t2. Then, if the horizontal synchronization signal (Hsync) is detected at the point of time ta, display of the next line starts.

The stop period setting example as shown in Fig. 22(B) is a case of 1.5xspeed reproduction, in which an interval of the horizontal synchronization signals (Hsync) is 1/90/1125 sec. The interval is set by the output information generating section 112 of the reproduction controller 110 as shown in Fig. 5.

The driving timing controller 122 of the display controller 120 discerns the stop period according to the above described setting of the horizontal synchronization signal (Hsync) and performs a reproduction process at various reproduction speeds.

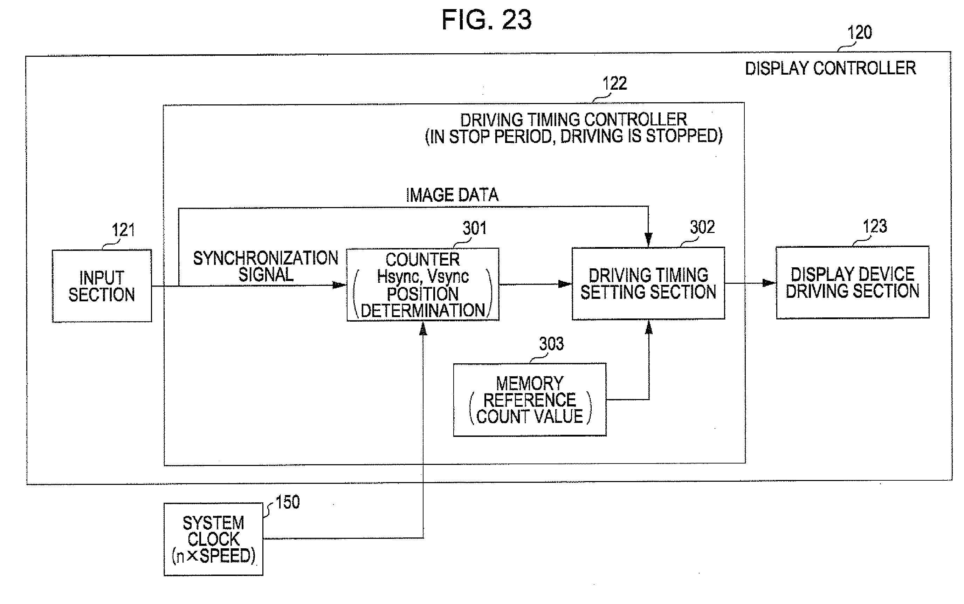

A configuration example of the display controller 120 according to the embodiment will be described with reference to Fig. 23. The display controller 120 according to the embodiment has the same configuration as in the display controller as described with reference to Fig. 5, and includes an input section 121, a driving timing controller 122 and a display device driving section 123.

In this embodiment, the configuration of the driving timing controller 122 in the display controller 120 is different from the configuration in the previous embodiment, and includes a counter 301. The counter 301 receives a clock from a system clock 150 and counts the number of clocks corresponding to an interval of synchronization signals of data which is input from a reproduction controller 110 (see Fig. 5) through the input section 121. A count value thereof is input to a driving timing setting section 302.

A reference count value of a synchronization signal (Vsync, Hsync) of original data is stored in a memory 303. That is, the reference count value refers to the number of clocks corresponding to an interval of vertical synchronization signals (Vsync) and the number of clocks corresponding to an interval of horizontal synchronization signals (Hsync), corresponding to nxspeed reproduction contents in which the stop period is not set.

The driving timing setting section 302 compares a count value which is input from the counter 301 with a reference count value which is stored in the memory 303, and determines, as the stop period, a period from a point of time when the measured count value exceeds the reference count value to a point of time when the next synchronization signal is detected. In the stop period, the driving timing setting section 302 performs a process of stopping driving of the display device driving section 123.

Through such a process, with respect to the input nxspeed contents, a specific stop period is set, and then, 0 to nxspeed contents reproduction is performed.

In this embodiment, since a synchronization signal accompanying an image signal is used as a stop period discerning signal, a reproduction speed change can be realized without addition of new signal transmission or a process configuration.

### 3. Example of a process in which a supply clock with respect to a display device is changed according to a stop period discerning signal (third embodiment)

In the above described embodiment, the reproduction controller 110 and the display controller 120 operate on the basis of nxspeed clocks which are supplied by the system clock 150, and an nxspeed reproduction image is output to the display section 130 and is intermittently stopped, and thus, the reproduction speed is performed in the range of 0 to nxspeed.

The change process of the reproduction speed with respect to the display section 130 is not limited to this process and, for example, can be realized by changing a clock frequency for regulating an operation speed of the display device driving section 123 of the display controller 120.

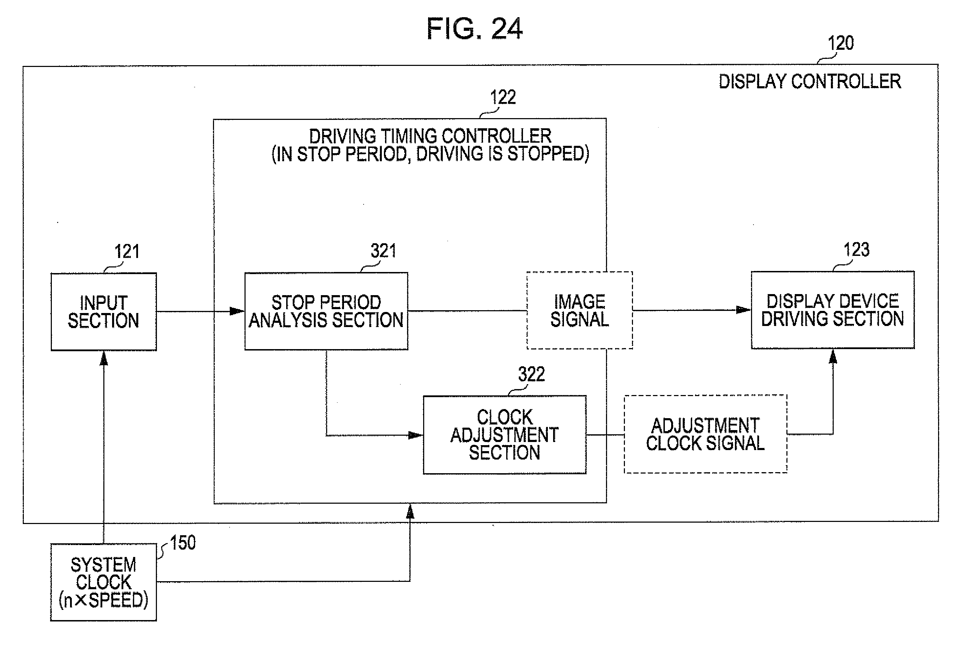

For example, as shown in Fig. 24, a stop period analysis section 321 and a clock adjustment section 322 are provided in the driving timing controller 122 of the display controller 120. The stop period analysis section 321 analyzes the stop period discerning signal (enable signal) as described with reference to Fig. 15 and the like in the first embodiment or the synchronization signal as described in the second embodiment, and discerns whether the reproduction speed is a specific speed of 0 to n×speed.

The clock adjustment section 322 generates an adjustment clock signal which is supplied to the display device driving section 123 on the basis of information about the reproduction speed which is analyzed by the stop period analysis section 321.

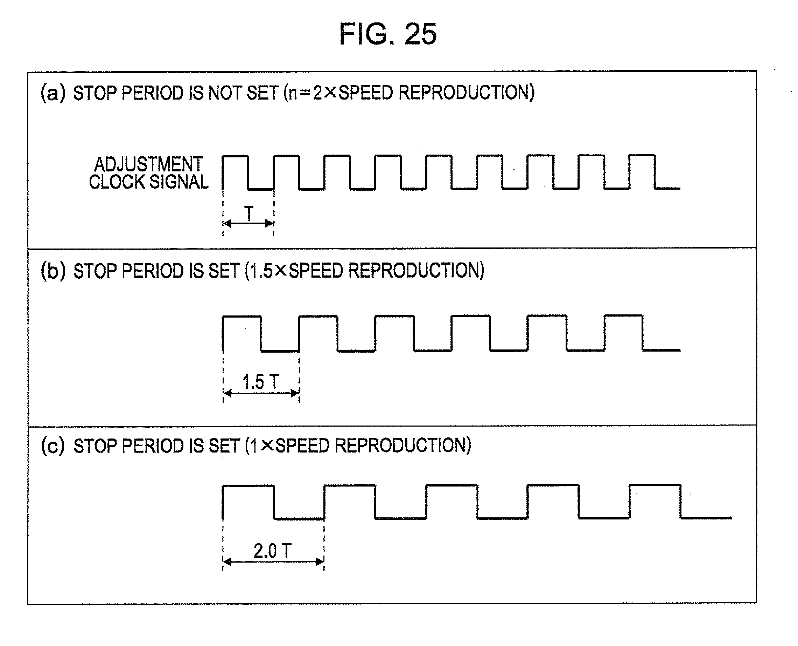

An example of the adjustment clock signal which is generated by the clock adjustment section 322 will be described with reference to Fig. 25. Fig. 25 illustrates adjustment clock signals; (a) an adjustment clock signal in a case where a stop period is not set (2xspeed reproduction); (b) an adjustment clock signal in a case where a stop period is set (1.5xspeed reproduction); and (c) an adjustment clock signal in a case where a stop period is set (1×speed reproduction).

In the case where (a) the stop period is not set, a supply clock of the system clock 150 is supplied to the display device driving section 123 as it is. The display device driving section 123 operates with the clock, and an image of 2xspeed is output to the display section 130.

In the case (b) where the stop period is set (1.5xspeed reproduction), the clock adjustment section 322 changes the supply clock of the system clock 150. An adjustment clock signal in which an interval of the supply clock of the system clock 150 is set to 1.5 times is generated and supplied to the display device driving section 123. The display device driving section 123 operates with the clock, and an image of 1.5xspeed is output to the display section 130.

In the case where the stop period is present (c) (1.0xspeed reproduction), the clock adjustment section 322 changes the supply clock of the system clock 150. An adjustment clock signal in which an interval of the supply clock of the system clock 150 is set to 2.0 times is generated and supplied to the display device driving section 123. The display device driving section 123 operates with the clock, and an image of 1.0×speed is output to the display section 130.

In this way, the driving timing controller 122 of the display controller 120 performs the process of changing the supply clock with respect to the display device driving section 123, to thereby realize the reproduction process at a variety of reproduction speeds.

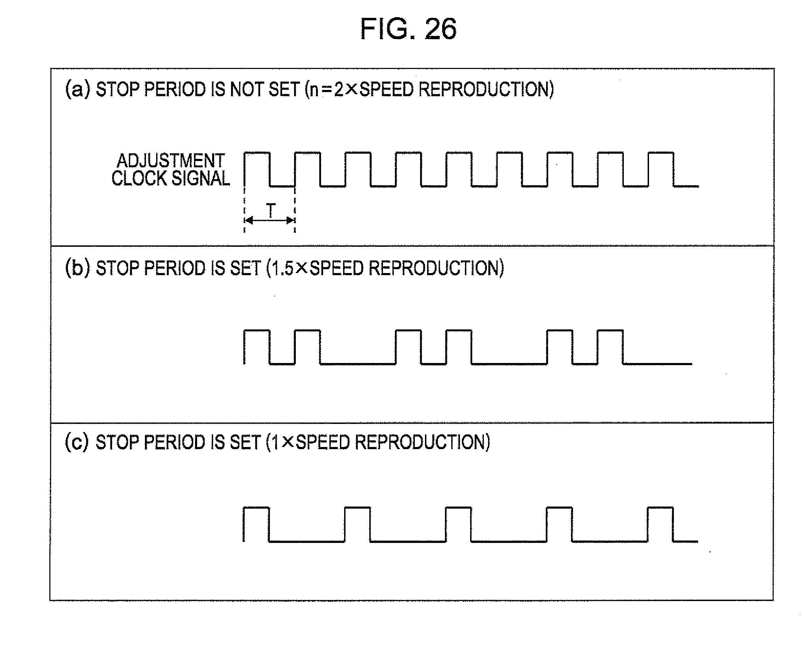

The adjustment clock signal as shown in Fig. 25 sets an interval of the supply clock of the system clock 150 to be 1.5 times or 2 times to change the clock period. For example, as shown in Fig. 26, without changing the clock period, a ratio of an on period of the clock to an off period of the clock may be changed. In Fig. 26, (a) illustrates an adjustment clock signal in a case where a stop period is not set (2xspeed reproduction); (b) illustrates an adjustment clock signal in a case where a stop period is set (1.5xspeed reproduction); and (c) illustrates an adjustment clock signal in a case where a stop period is set (1.0xspeed reproduction).

In this embodiment, even though the stop period setting process in the reproduction controller 110 is not performed, the driving timing controller 122 of the display controller 120 may receive the reproduction speed designation information through the user interface 140, generate the adjustment clock signal in which the clock frequency corresponding to the designated reproduction speed is set, and then, supply the generated signal to the display device driving section 123.

Hereinbefore, the invention has been described with reference to the specific embodiments. However, it is obvious that those skilled in the art can make modifications or substitutions from the embodiments without departing from the spirit of the invention. That is, the invention should not be interpreted to be limited to the exemplary embodiments. The scope of the invention should be defined with reference to the accompanying claims.

Further, the series of processes described in the above description may be performed by hardware, software or a combination thereof. In the case where the process is performed by the software, a program in which a process sequence is recorded may be installed and executed in a memory in a computer which is assembled in specially used hardware, or may be installed and executed in a general-purpose computer which is capable of performing a variety of processes. For example, the program may be recorded in a recording medium in advance. The program may be installed to the computer from a recording medium, may be received through a network such as LAN (Local Area Network) or the Internet, or may be installed in a recording medium such as a built-in hard disc.

The variety of processes as described above may be performed in the described order in a time series manner, or may be performed in parallel or individually according to a processing ability of a processing apparatus or as necessary. Further, the system in the embodiments has a configuration that a plurality of apparatuses is logically combined, and is not limited to a configuration that respective apparatuses are installed inside of the same casing.

The present application contains subject matter related to that disclosed in Japanese Priority Patent Application JP 2009-145986 filed in the Japan Patent Office on June 19, 2009, the entire content of which is hereby incorporated by reference.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

It should be understood by those skilled in the art that various modifications, combinations, sub-combinations and alterations may occur depending on design requirements and other factors insofar as they are within the scope of the appended claims or the equivalents thereof.

## Claims

1. An information reproducing apparatus comprising:
a reproduction controller which generates a stop period discerning signal for discerning a stop period in which output of an image signal to a display section is stopped and outputs the stop period discerning signal with the image signal; and
a display controller which controls the output of the image signal to the display section, the display controller discerning the stop period on the basis of the stop period discerning signal, stopping the output of the image signal to the display section in the stop period, and enabling the output of the image signal in an effective period other than the stop period.

2. The information reproducing apparatus according to Claim 1, wherein the reproduction controller sets the stop period with respect to an original image which is a maximum speed reproduction image of an nxspeed image, and generates the stop period discerning signal for enabling reproduction at a specific speed in a range of 0 to nxspeed, and
wherein the display controller displays as the nxspeed image an image in which the stop period is not set by continuously outputting the image to the display section, and displays as a 0 to nxspeed image an image in which the stop period is set by stopping outputting the image to the display section corresponding to the length of the stop period on the basis of the stop period discerning signal.

3. The information reproducing apparatus according to Claim 1 or 2, wherein the reproduction controller sets the stop period according to any one or any combination of (a) a Y directional intensive stop period setting type in which the stop period is set between image frames, (b) a Y directional dispersed stop period setting type in which the stop period is dispersedly set in each image frame, (c) an X directional intensive stop period setting type in which the stop period is set between lines forming the image frame, and (d) an X direction dispersed stop period setting type in which the stop period is dispersedly set inside the lines forming the image frame, and generates the stop period discerning signal for discerning the set stop period.

4. The information reproducing apparatus according to Claim 1 or 2, wherein the reproduction controller determines the stop period for achieving a designated reproduction speed on the basis of reproduction speed designation information which is input through a user interface, and generates the stop period discerning signal for discerning the determined stop period.

5. The information reproducing apparatus according to Claim 1 or 2, wherein the reproduction controller generates, as the stop period discerning signal, an enable signal in which a valid period and an invalid period of a clock signal for controlling a process timing of the display controller are set so that the stop period is set as the invalid period, and
wherein the display controller discerns the valid period and the invalid period of the input clock signal on the basis of the enable signal, and outputs the image signal to the display section in the valid period and stops outputting the image signal to the display section in the invalid period.

6. The information reproducing apparatus according to Claim 1 or 2, wherein the reproduction controller generates, as the stop period discerning signal, an adjusted signal of a synchronization signal in which at least one of a vertical synchronization signal and a horizontal synchronization signal of the image signal is adjusted, and
wherein the display controller compares a count value of a clock number in a synchronization signal period of the adjusted signal of the synchronization signal with a reference count value which is previously stored in a memory, determines the synchronization signal period exceeding the reference count value as the stop period, and stops outputting the image signal to the display section.

7. An information reproducing apparatus comprising:
a reproduction controller which generates a stop period discerning signal for discerning a stop period in which output of an image signal to a display section is stopped and outputs the stop period discerning signal with the image signal; and
a display controller which controls the output of the image signal to the display section, the display controller generating an adjustment clock signal in which the frequency of a system clock is adjusted according to a reproduction speed discerned by the stop period discerning signal and driving a display device driving section according to the adjustment clock signal to perform change of the reproduction speed.

8. An information reproducing method which is performed in an information reproducing apparatus, comprising the steps of:
generating a stop period discerning signal for discerning a stop period in which output of an image signal to a display section is stopped and outputting the stop period discerning signal with the image signal, by a reproduction controller; and
discerning the stop period on the basis of the stop period discerning signal, stopping the output of the image signal to the display section in the stop period, and outputting the image signal in an effective period other than the stop period, by a display controller which controls the output of the image signal to the display section.

9. A program for executing an information reproducing process in an information reproducing apparatus, comprising:
generating a stop period discerning signal for discerning a stop period in which output of an image signal to a display section is stopped and outputting the stop period discerning signal with the image signal, in a reproduction controller; and
discerning the stop period on the basis of the stop period discerning signal, stopping the output of the image signal to the display section in the stop period, and outputting the image signal in an effective period other than the stop period, in a display controller which controls the output of the image signal to the display section.
